# EUROPEAN PATENT SPECIFICATION

(11) **EP 4 136 616 B1**
(45) Date of publication and mention of the grant of the patent: **06.11.2024**
(21) Application number: 21714164.7
(22) Date of filing: 25.03.2021
(51) Int. Cl.: G06T 7/11, G06T 7/136, G06T 7/174

(54) **VERIFICATION OF SEGMENTATION OF LUMINESCENCE IMAGES LIMITED TO ANALYSIS REGIONS THEREOF**
VERIFIZIERUNG DER SEGMENTIERUNG VON LUMINESZENZBILDERN, DIE AUF ANALYSEBEREICHE DAVON BESCHRÄNKT SIND
VÉRIFICATION DE LA SEGMENTATION D'IMAGES DE LUMINESCENCE LIMITÉE AUX RÉGIONS D'ANALYSE CORRESPONDANTES

(30) Priority: 14.04.2020 EP 20169301
(43) Date of publication of application: 22.02.2023
(73) Proprietor: SurgVision GmbH, 81379 Munich (DE)
(72) Inventor: TARUTTIS, Adrian, 81379 Munich (DE); KOCH, Maximilian, 81379 Munic (DE); VALBUSA, Giovanni, 10010 Colleretto Giacosa (TO) (IT)
(74) Representative: Pezzoli, Ennio
(86) International application number: PCT/EP2021/057729
(87) International publication number: WO 2021/209239

(56) References cited:
- US-A1- 2019 030 371
- ZHANG H ET AL: "Image segmentation evaluation: A survey of unsupervised methods", COMPUTER VISION AND IMAGE UNDERSTANDING, ACADEMIC PRESS, US, vol. 110, no. 2, 1 May 2008 (2008-05-01), pages 260 - 280, XP022613231, ISSN: 1077-3142, [retrieved on 20080415], DOI: 10.1016/J.CVIU.2007.08.003
- SHARMA N K ET AL: "Statistical evaluation of image segmentation", ADVANCE COMPUTING CONFERENCE (IACC), 2010 IEEE 2ND INTERNATIONAL, IEEE, PISCATAWAY, NJ, USA, 19 February 2010 (2010-02-19), pages 101 - 105, XP031643664, ISBN: 978-1-4244-4790-9

## Description

### Technical field

The present disclosure relates to imaging applications. More specifically, this disclosure relates to luminescence imaging.

### Background art

The background of the present disclosure is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present disclosure.

Luminescence imaging, and especially fluorescence imaging, is a specific imaging technique that is used to acquire images providing a visual representation of objects, even if they are not visible directly. This technique is based on a luminescence phenomenon, consisting of the emission of light by luminescence substances when subject to any excitation different from heating; particularly, a fluorescence phenomenon occurs in fluorescence substances (called fluorophores), which emit (fluorescence) light when they are illuminated. For this purpose, fluorescence images are generally displayed to represent the fluorescence light that is emitted from different locations of the objects, and then the fluorophores that are present therein.

Fluorescence imaging is routinely exploited in medical equipment to inspect (inner) body-parts of patients. In this case, fluorescence agents (possibly adapted to reaching specific molecules of desired targets, such as lesions like tumors, and then to remaining immobilized thereon in Fluorescence Molecular Imaging (FMI) applications) are generally administered to the patients. The representation of the (immobilized) fluorescence agents in the fluorescence images facilitates the identification (and quantification) of the targets. This information may be used in several medical applications, for example, in surgical applications for recognizing margins of the lesions to be resected, in diagnostic applications for discovering or monitoring the lesions and in therapeutic applications for delineating the lesions to be treated.

However, the correct recognition of the lesions remains quite challenging, since it is adversely affected by several hindering factors. For example, the lesions may emit a variable amount of fluorescence light because of differences in biology and perfusion of their tissues. Moreover, other parts of the field of view different from the lesions may emit disturbing fluorescence light varying according to their type; for example, the disturbing light may be due to surgical instruments, hands, surgical tools, surrounding body-parts (such as skin around a surgical cavity or irrelevant organs within it) and background materials.

Particularly, the fluorescence images are often segmented into portions with substantially homogenous characteristics (segments) to discriminate the fluorophores (and then the corresponding targets) from a rest of the field of view; with particular reference to the medical applications, the segmentation of the fluorescence images may be used to discriminate the lesions from healthy tissue. For this purpose, the locations of the body-part are classified into a segment of the lesion or a segment of the healthy tissue by comparing corresponding (fluorescence) values of each fluorescence image with a segmentation threshold. The segmentation threshold is generally calculated automatically according to a statistical distribution of the fluorescence values. However, the disturbing light biases the statistical distribution of the fluorescence values, and then the segmentation threshold (either increasing or reducing it). This involves the risk of misclassifying the locations of the body-part.

For example, in surgical applications this leads to uncertainty about the precise recognition of the margins of the lesions (with the risk of incomplete resection of the lesions or excessive removal of healthy tissue). In diagnostic applications, this adversely affects the identification and/or the quantification of the lesions, which may lead to misinterpretations (with the risk of false positives/negatives and wrong follow-up). In therapeutic applications, this adversely affects the delineation of the lesions to be treated (with the risk of reduced effectiveness of a therapy or of damages to healthy tissue).

US-A-2019/030371 discloses a technique for segmenting 3D medical images. For this purpose, a first neural network working on 2D or 2.5D is used to produce a quick estimation of a smaller region of interest within a large 3D structure; a second neural network working on 3D is then used to get a more accurate segmentation of such region of interest.

### Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present disclosure is based on the idea of verifying the segmentation when limited to an analysis region.

Particularly, an aspect provides a method for imaging a field of view comprising a target containing a luminescence substance. The method comprises setting an analysis region to a portion of a luminescence image surrounding a suspected representation of the target and segmenting the analysis region into a detection segment and a non-detection segment of the luminescence agent; the luminescence image is then displayed with the detection segment that is highlighted according to a verification indicator based on a quality of the segmentation.

A further aspect provides a computer program for implementing the method. An example not covered by the claims provides a corresponding computer program product. A further aspect provides a system for implementing the method. An example not covered by the claims provides a corresponding surgical method. An example not covered by the claims provides a corresponding diagnostic method. An example not covered by the claims provides a corresponding therapeutic method.

More specifically, one or more aspects of the present disclosure are set out in the independent claims and advantageous features thereof are set out in the dependent claims, with the wording of all the claims that is herein incorporated *verbatim* by reference (with any advantageous feature provided with reference to any specific aspect that applies *mutatis mutandis* to every other aspect).

### Brief description of the drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, such as value, content and representation). Particularly:
FIG. 1 shows a schematic block diagram of an imaging system that may be used to practice the solution according to an embodiment of the present disclosure,
FIG.2A-FIG.2C and FIG.3A-FIG.3D show different examples of application of the solution according to an embodiment of the present disclosure,
FIG.4 shows the main software components that may be used to implement the solution according to an embodiment of the present disclosure, and
FIG.5A-FIG.5C show an activity diagram describing the flow of activities relating to an implementation of the solution according to an embodiment of the present disclosure.

### Detailed description

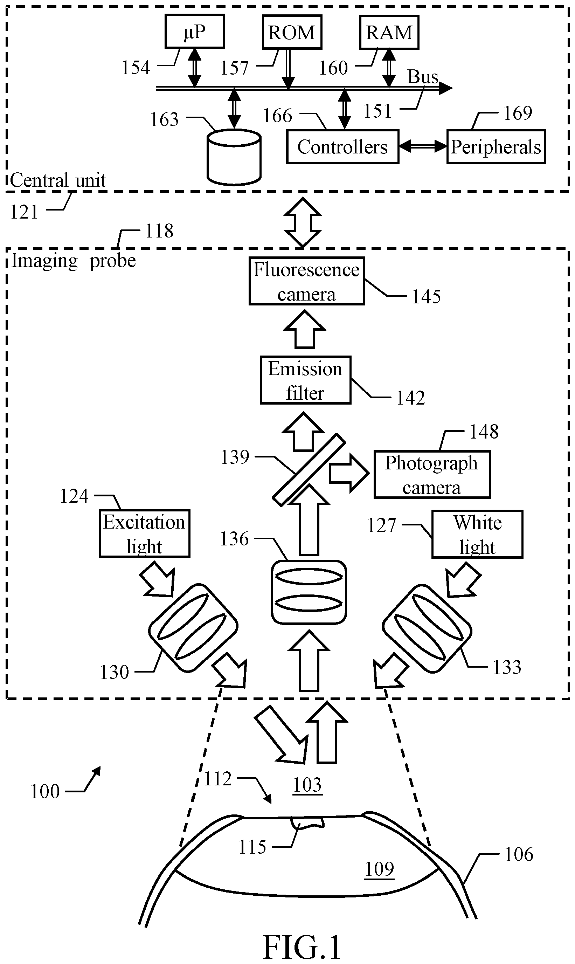

With reference in particular to FIG. 1, a schematic block diagram is shown of an imaging system 100 that may be used to practice the solution according to an embodiment of the present disclosure.

The imaging system 100 allows imaging a scene of a corresponding field of view 103 (defined by a part of the world within a solid angle to which the imaging system 100 is sensitive). For example, the imaging system 100 is used to assist a surgeon in surgical applications, commonly known as Fluorescence Guided Surgery (FGS), and particularly Fluorescence Guided Resection (FGR) when relating to tumors. In this specific case, the field of view 103 relates to a patient 106 undergoing a surgical procedure, to whom a fluorescence agent has been administered (for example, adapted to accumulating in tumors). The field of view 103 contains a body-part 109 of the patient 106, wherein a surgical cavity 112 (for example, a small skin incision in minimally invasive surgery) has been opened to expose a tumor 115 to be resected. The field of view 103 may also contain one or more foreign objects different from the surgical cavity 112 (not shown in the figure), for example, surgical instruments, hands, surgical tools, surrounding body-parts, background materials and so on (either around or overlapping the surgical cavity 112).

The imaging system 100 has an imaging probe 118 for acquiring images of the field of view 103 and a central unit 121 for controlling its operation.

Starting from the imaging probe 118, it has an illumination unit (for illuminating the field of view 103) and an acquisition unit (for acquiring images of the field of view 103) that comprise the following components. In the illumination unit, an excitation light source 124 and a white light source 127 generate an excitation light and a white light, respectively. The excitation light has wavelength and energy suitable to excite the fluorophores of the fluorescence agent (such as of Near Infra-Red, or NIR, type), whereas the white light appears substantially colorless to the human eye (such as containing all the wavelengths of the spectrum that is visible to the human eye at equal intensity). Corresponding delivery optics 130 and delivery optics 133 deliver the excitation light and the white light, respectively, to the (same) field of view 103. In the acquisition unit, collection optics 136 collect light from the field of view 103 (in an epi-illumination geometry). The collected light comprises fluorescence light that is emitted by any fluorophores present in the field of view (illuminated by the excitation light). Indeed, the fluorophores pass to an excited (electronic) state when they absorb the excitation light; the excited state is unstable, so that the fluorophores very shortly decay therefrom to a ground (electronic) state, thereby emitting the fluorescence light (at a characteristic wavelength, longer than the one of the excitation light because of energy dissipated as heat in the excited state) with an intensity depending on the amount of the fluorophores that are illuminated (and on other factors comprising fluorophores position within the field of view 103 and the body-part 109). Moreover, the collected light comprises reflectance light in the visible spectrum, or visible light, which is reflected by any objects present in the field of view (illuminated by the white light). A beam-splitter 139 splits the collected light into two channels. For example, the beam-splitter 139 is a dichroic mirror transmitting and reflecting the collected light at wavelengths above and below, respectively, a threshold wavelength between a spectrum of the visible light and a spectrum of the fluorescence light (or *vice-versa*)*.* In the (transmitted) channel of the beam-splitter 139 with the fluorescence light defined by the portion of the collected light in its spectrum, an emission filter 142 filters the fluorescence light to remove any excitation lights (which might be reflected by the field of view 103) and ambient lights (which might be generated by intrinsic fluorescence). A fluorescence camera 145 (for example, of EMCCD type) receives the fluorescence light from the emission filter 142 and generates a corresponding fluorescence (digital) image representing the distribution of the fluorophores in the field of view 103. In the other (reflected) channel of the beam-splitter 139 with the visible light defined by the portion of the collected light in its spectrum, a reflectance, or photograph, camera 148 (for example, of CCD type) receives the visible light and generates a corresponding reflectance, or photograph, (digital) image representing what is visible to the human eye in the field of view 103.

Moving to the central unit 121, it comprises several units that are connected among them through a bus structure 151. Particularly, one or more microprocessors (µP) 154 provide a logic capability of the central unit 121. A non-volatile memory (ROM) 157 stores basic code for a bootstrap of the central unit 121 and a volatile memory (RAM) 160 is used as a working memory by the microprocessors 154. The central unit 121 is provided with a mass-memory 163 for storing programs and data (for example, a Solid-State-Disk, or SSD). Moreover, the central unit 121 comprises a number of controllers 166 for peripherals, or Input/Output (I/O) units. Particularly, the controllers 166 control the excitation light source 124, the white light source 127, the fluorescence camera 145 and the photograph camera 148 of the imaging probe 118; moreover, the controllers 166 control further peripherals, denoted as a whole with the reference 169, such as one or more monitors for displaying the images, a keyboard for entering commands, a trackball for moving a pointer on the monitor(s), a drive for reading/writing removable storage units (such as USB keys) and a network interface card (NIC) for connecting to a communication network (such as a LAN).

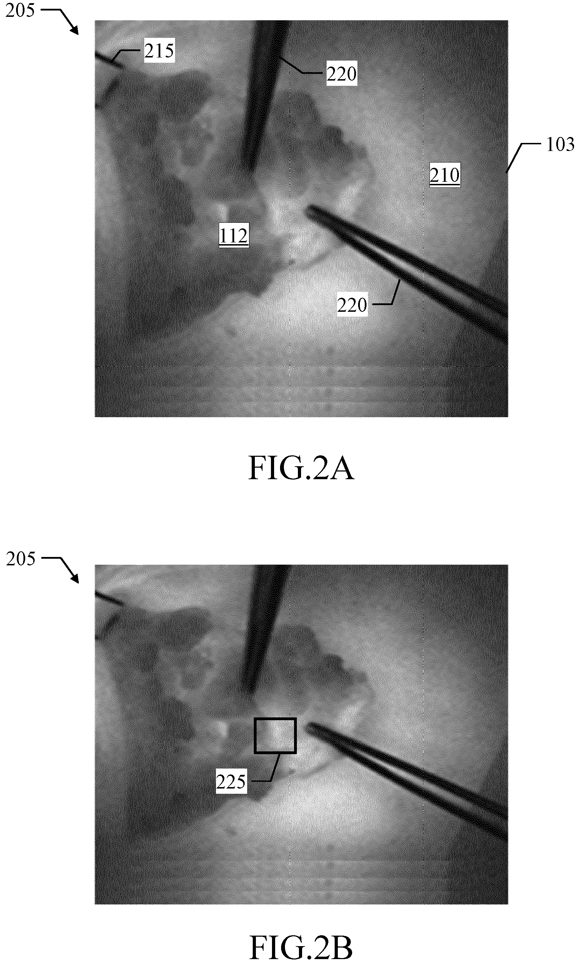

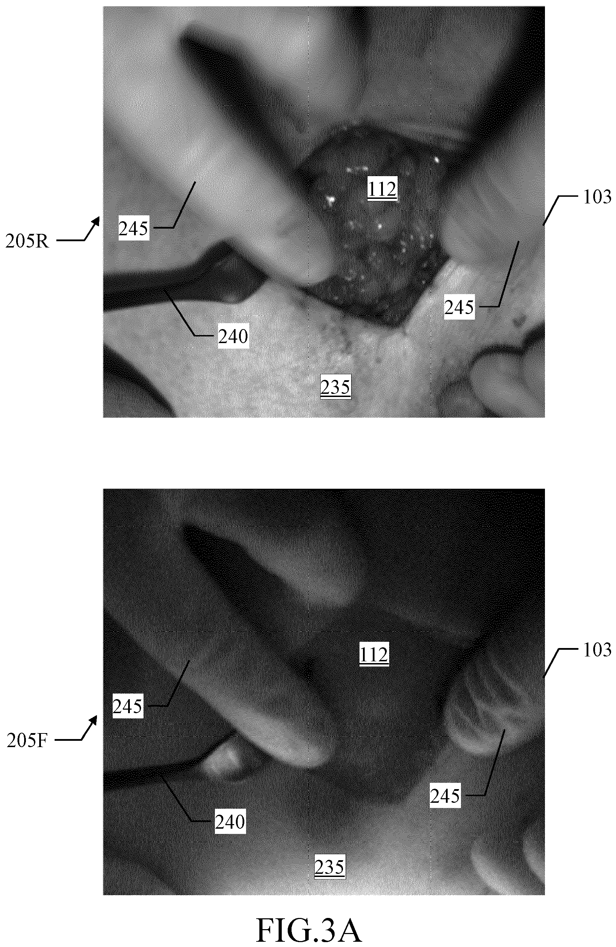

With reference now to FIG.2A-FIG.2C and FIG.3A-FIG.3D, different examples are shown of application of the solution according to an embodiment of the present disclosure. Particularly, FIG.2A-FIG.2C relate to a (basic) unaided operation mode and FIG.3A-FIG.3D relate to an (advanced) aided operation mode of the imagining system.

Starting from FIG.2A (unaided operation mode), a fluorescence image 205 has been acquired of the field of view 103. The fluorescence image 205 provides a representation of the surgical cavity 112 (with the tumor) and of different foreign objects comprising skin 210 around the surgical cavity 112, a tissue retractor 215 and clamps 220.

Moving to FIG.2B, in the solution according to an embodiment of the present disclosure, an analysis region 225 is set to a portion of the fluorescence image 205 surrounding the (suspected) representation of the tumor. Particularly, in this specific implementation the analysis region 225 has a pre-defined shape and size (a small square equal to a pre-defined fraction of the fluorescence image 205) and it is centered in the fluorescence image 205 (possibly adjusted to contain the representation of the tumor and of some adjacent healthy tissue).

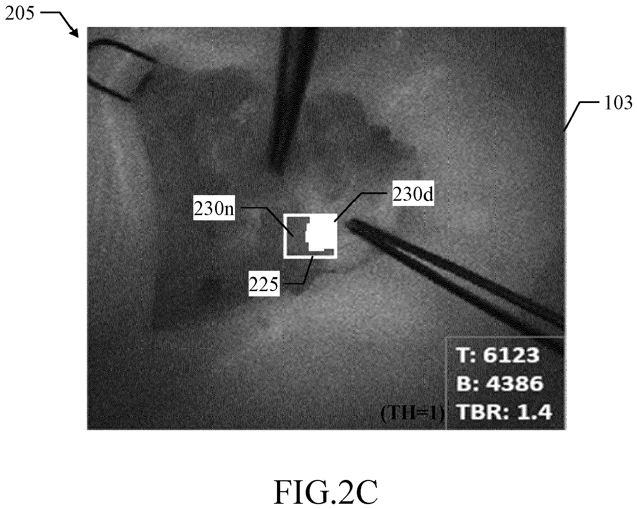

Moving to FIG.2C, the analysis region 225 is segmented into a detection segment 230d and a non-detection segment 230n according to (fluorescence) values of the fluorescence image 205 only in the analysis region 225; the detection segment 230d is representative of detection of the fluorescent agent and the non-detection segment 230n is representative of non-detection of the fluorescent agent, *i.e.*, in this case of the (suspected) tumor and of healthy tissue defining a background thereof, respectively. For example, a segmentation threshold is calculated according to a statistical distribution of the fluorescence values of the analysis region 225; corresponding locations of the field of view 103 are assigned to the detection segment 230d or to the non-detection segment 230n according to a comparison of the fluorescence values with the segmentation threshold. A verification indicator is then determined, based on a quality indicator of the segmentation of the analysis region 225. For example, a mean value of the fluorescence values of the detection segment 230d (Tumor Intensity (TI) equal to 6123 for the tumor in the figure) and a mean value of the fluorescence values of the non-detection segment 230n (Background Intensity (BI) equal to 4386 for the background of the healthy tissue in the figure) are calculated; the verification indicator is set to the quality indicator given by the mean value of the detection segment 230d divided by the mean value of the non-detection segment 230n (Tumor to Background Ratio (TBR) equal to 1.4 in the figure). The fluorescence image 205 is then displayed with the detection segment 230d that is highlighted according to the verification indicator. For example, the verification indicator is compared with a verification threshold, such as pre-defined for the type of surgical procedure (TH=1 in the figure); the detection segment 230d is colored when the verification indicator is higher than the verification threshold (1.4>1 in this case), whereas it is left in back-and-white otherwise (not shown in the figure).

The above-described solution significantly facilitates the recognition of the tumor. Indeed, the limitation of the segmentation only to the (small) analysis region 225 allows excluding further variations of the fluorescence light due to disturbing fluorescence light from other parts of the field of view 103 different from the tumor.

Particularly, the statistical distribution of the fluorescence values in the analysis region 225 is now unbiased (since any disturbing light affecting the rest of the florescence image 205 does not contribute thereto). As a result, the segmentation threshold is more accurate, thereby reducing the risk of misclassification of the locations of the field of view 103.

At the same time, the visualization of the fluorescence image 205 (representing the whole field of view 103) provides a contextualized representation of the tumor within the body-part; moreover, this allows moving the analysis region 225 to further parts of the field of view 103 if necessary.

In any case, the (dynamic) highlighting of the detection segment 230d according to the verification indicator allows recognizing the tumor only when it should be actually present. Indeed, when the quality of the segmentation is sufficiently good, it is very likely that the detection segment 230d represents the tumor; in this case, the highlighted visualization of the detection segment 230d is immediately evident to the surgeon, so that the corresponding portion of the body-part may be resected with a high confidence that it relates to a true positive. Conversely, when the quality of the segmentation is relatively bad, it is doubtful whether the detection segment 230d actually represents the tumor; in this case, the missing (or reduced) highlighting of the detection segment prevents the surgeon to act on the corresponding portion of the body-part since a risk exists of a false positive.

The above-described solution significantly reduces the risk of incomplete resection of the tumor or of excessive removal of healthy tissue. All of the above has a beneficial effect on the health of the patient.

With reference now to FIG.3A (aided operation mode), a pair of corresponding reflectance image 205R and fluorescence image 205F have been acquired of the same field of view 103. The reflectance image 205R and the fluorescence image 205F provide a concurrent representation (in terms of visible light and fluorescence light, respectively) of the surgical cavity 112 (with the tumor) and of different foreign objects comprising skin 235 and a tissue retractor 240 around the surgical cavity 112 and surgeon hands 245 (partially) overlapping the surgical cavity 112.

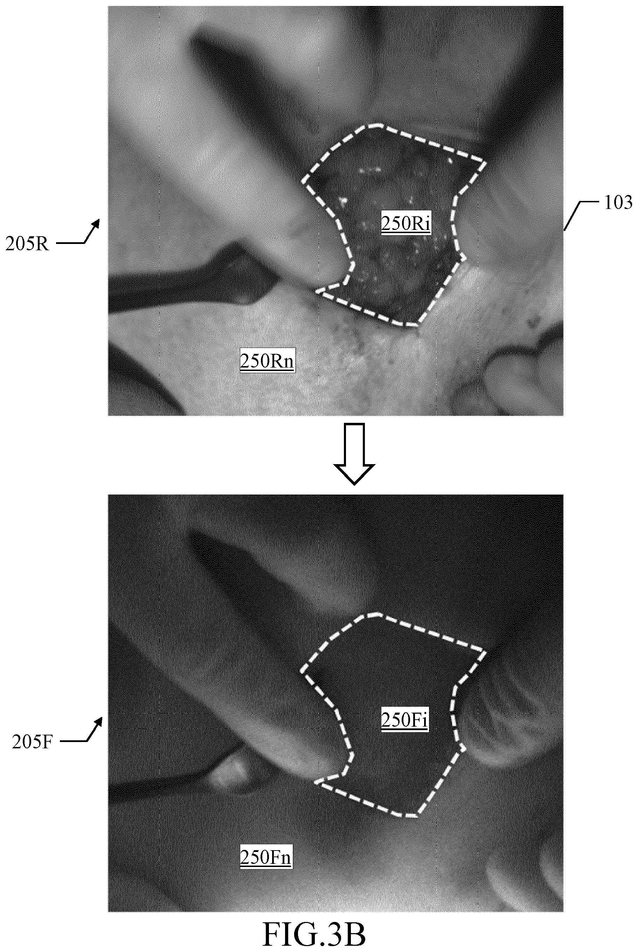

Moving to FIG.3B, in the solution according to an embodiment of the present disclosure, a (reflectance) informative region 250Ri is identified in the reflectance image 205R according to its content. The informative region 250Ri represents the surgical cavity without the foreign objects (the skin, the tissue retractor and the surgeon hands in this case), and then an informative part of the field of view 103 that is actually of interest for the surgical procedure (*i.e.,* a region of interest, or ROI, thereof). The rest of the reflectance image 205R then defines a (reflectance) non-informative region 250Rn that represents the foreign objects, and then a non-informative part of the field of view 103 that is not of interest for the surgical procedure. For example, as described in detail in the following, this result is achieved with semantic segmentation techniques (such as based on the use of a neural network).

The identification of the informative region 250Ri (and then of the non-informative region 250Rn as well) in the reflectance image 205F is transferred to the fluorescence image 205F. Particularly, a (fluorescence) informative region 250Fi is identified in the fluorescence image 205F corresponding to the informative region 250Ri. As a result, the rest of the fluorescence image 205F defines a (fluorescence) non-informative region 250Fn corresponding to the non-informative region 250Rn.

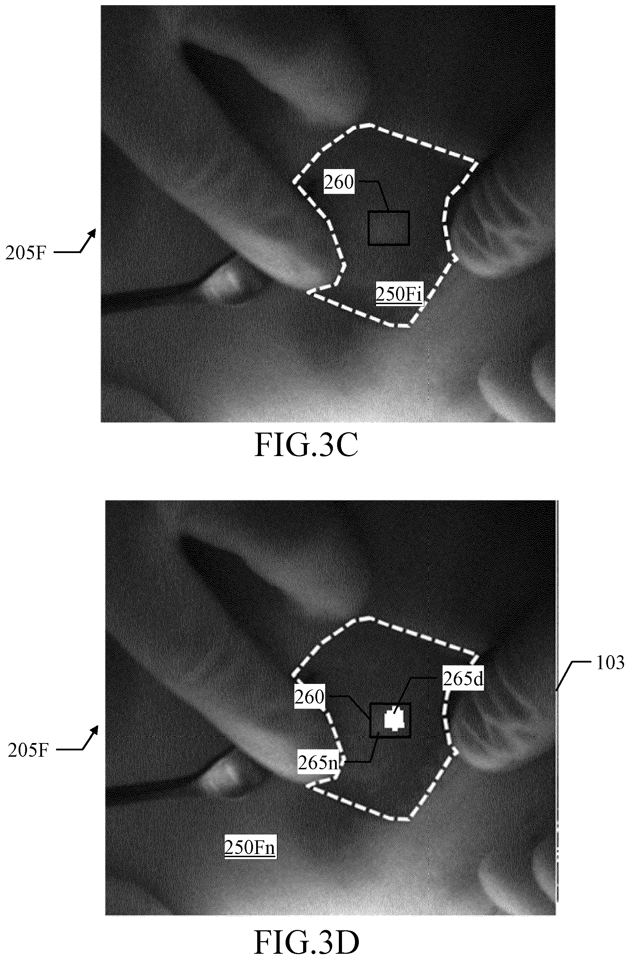

Moving to FIG.3C, a similar analysis region 260 is now set to a portion of the informative region 250Fi (in the fluorescence image 205F) surrounding the (suspected) representation of the tumor. Particularly, in this specific implementation the analysis region 260 has a pre-defined shape and size (a small square equal to a pre-defined fraction of the informative region 250Fi) and it is centered in the informative region 250Fi (possibly adjusted to contain the representation of the tumor and of some adjacent healthy tissue).

Moving to FIG.3D, the analysis region 260 is processed in the same way as above. Therefore, the analysis region 260 is segmented into a detection segment 265d and a non-detection segment 265n according to the fluorescence values of the fluorescence image 205F only in the analysis region 260 (by means of a segmentation threshold calculated according to the statistical distribution of its fluorescence values). A verification indicator is determined based on a quality indicator of the segmentation of the analysis region 260 (for example, set to the corresponding TBR). As show in the figure, in this case as well the fluorescence image 205F is then displayed with the detection segment 265d that is highlighted according to the verification indicator, for example, colored when the verification indicator is higher than the verification threshold (whereas it is left in back-and-white otherwise, not shown in the figure).

The above-described implementation further improves the reliability of the recognition of the tumor. Indeed, in this case only the (informative) representation of the surgical cavity is taken into account, instead automatically disregarding the (non-informative) representation of the foreign objects (around and/or overlapping it).This avoids (or at least substantially reduces) any adverse effect of the foreign objects in the segmentation of the analysis region 260. Particularly, the statistical distribution of the fluorescence values on which the segmentation of the analysis region 260 is based is now unbiased (since the fluorescence values in the non-informative region 250Fn do not contribute thereto).

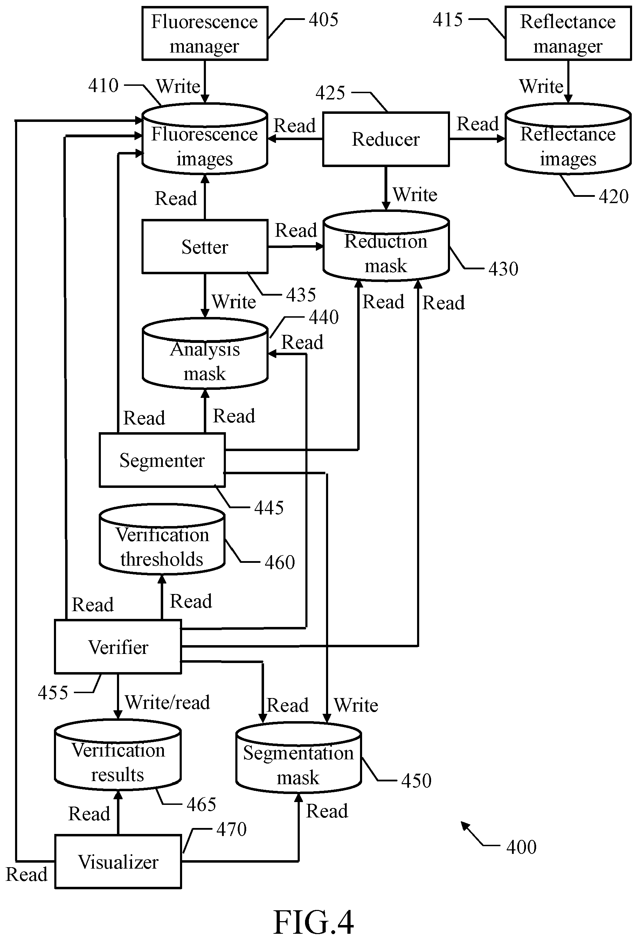

With reference now to FIG.4, the main software components are shown that may be used to implement the solution according to an embodiment of the present disclosure.

All the software components (programs and data) are denoted as a whole with the reference 400. The software components 400 are typically stored in the mass memory and loaded (at least in part) into the working memory of the central unit of the imaging system when the programs are running, together with an operating system and other application programs not directly relevant to the solution of the present disclosure (thus omitted in the figure for the sake of simplicity). The programs are initially installed into the mass memory, for example, from removable storage units or from the communication network. In this respect, each program may be a module, segment or portion of code, which comprises one or more executable instructions for implementing the specified logical function.

A fluorescence manager 405 manages a fluorescence unit of the imaging system (comprising the excitation light source and the fluorescence camera) dedicated to acquiring the fluorescence images of the field of view suitable illuminated for this purpose. The fluorescence manager 405 accesses (in write mode) a fluorescence images repository 410, which stores a sequence of fluorescence images being acquired in succession during an imaging process that is in progress. Each fluorescence image is defined by a bitmap comprising a matrix of cells (for example, with 512 rows and 512 columns) each storing the (fluorescence) value of a pixel, *i.e.*, a basic picture element corresponding to a (fluorescence) location of the field of view; each pixel value defines the brightness of the pixel as a function of an intensity of the fluorescence light emitted by the location, and then of an amount of the fluorescence agent present therein (for example, from black to white as the amount of the fluorescence agent increases). Likewise, a reflectance manager 415 manages a reflectance unit of the imaging system (comprising the white light source and the photograph camera) dedicated to acquiring the reflectance images of the field of view suitable illuminated for this purpose. The reflectance manager 415 accesses (in write mode) a reflectance images repository 420, which stores a sequence of reflectance images being acquired in succession during the same imaging process (synchronized with the fluorescence images in the corresponding repository 410). Each reflectance image is defined by a bitmap comprising a matrix of cells (with either the same or different size with respect to the fluorescence images) each storing the (reflectance) value of a pixel corresponding to a (reflectance) location of the field of view (either the same or different with respect to the fluorescence locations); each pixel value defines the visible light that is reflected by the location (such as its RGB components).

In the aided implementation, a reducer 425 reduces a (selected) fluorescence image to its informative region, by segmenting the corresponding reflectance image (semantically) into its informative region and non-informative region (according to the content thereof and possibly further according to the content of the fluorescence image), and then transferring the segmentation of the reflectance image to the fluorescence image. The reducer 425 accesses (in read mode) the reflectance images repository 420 and (optionally) the fluorescence images repository 410, and it accesses (in write mode) a reduction mask repository 430. The reduction mask repository 430 stores a (fluorescence) reduction mask defining the informative/non-informative regions of the fluorescence image. The reduction mask is formed by a matrix of cells with the same size as the fluorescence images, each storing a reduction flag indicating a classification of the corresponding pixel into the informative region or the non-informative region; for example, the reduction flag is asserted (such as at the logic value 1) when the pixel belongs to the informative region and it is deasserted (such as at the logic value 0) when the pixel belongs to the non-informative region. The reducer 425 also uses a variable (not shown in the figure) that stores a (reflectance) reduction mask defining the informative/non-informative regions of the reflectance image in a similar way (*i*.*e*., by a matrix of cells with the same size as the reflectance images, each storing a reduction flag indicating a classification of the corresponding pixel into the informative region or the non-informative region). In any case, a setter 435 is used to set the analysis region (within the whole fluorescence image in the unaided implementation or within its informative region in the aided implementation). The setter 435 accesses (in read mode) the fluorescence images repository 410 and (possibly) the reduction mask repository 430. Moreover, the setter 435 exposes a user interface for adjusting the analysis region manually. The setter 435 accesses (in write mode) an analysis mask repository 440. The analysis mask repository 440 stores an analysis mask defining the (common) analysis region of the fluorescence images. The analysis mask is formed by a matrix of cells with the same size as the fluorescence images, each storing an analysis flag that is asserted (such as at the logic value 1) when the pixel belongs to the analysis region and it is deasserted (such as at the logic value 0) otherwise. A segmenter 445 segments the analysis regions of the fluorescence images into their detection segments and non-detection segments with a thresholding technique. The segmenter 445 accesses (in read mode) the fluorescence images repository 410, the analysis mask repository 440 and (possibly) the reduction mask repository 430, and it accesses (in write mode) a segmentation masks repository 450. The segmentation masks repository 450 comprises an entry for each fluorescence image in the corresponding repository 410; the entry stores a segmentation mask defining the detection/non-detection segments of the analysis region of the fluorescence image. The segmentation mask is formed by a matrix of cells with the same size as the fluorescence images, each storing a segmentation flag that is asserted (such as at the logic value 1) when the pixel belongs to the detection segment of the analysis region and it is deasserted (such as at the logic value 0) otherwise, *i*.*e*., when the pixel belongs to the non-detection segment of the analysis region or it is outside the analysis region and possibly the informative region. A verifier 455 verifies the segmentations of the fluorescence images (by calculating the corresponding verification indicators and possibly comparing them with the verification threshold). The verifier 455 accesses (in read mode) the fluorescence images repository 410, the segmentation masks repository 450, the analysis mask repository 440 and (possibly) the reduction mask repository 430. Moreover, the verifier 455 may also access (in read mode) a verification thresholds repository 460. The verification thresholds repository 460 stores one or more verification thresholds for corresponding targets (for example, different types of tumors in different organs). These verification thresholds have been pre-determined from clinical evidence and/or studies. For example, for each target the same operations mentioned above are applied during several surgical procedures, and the corresponding verification indicators (for their segmentations) are recorded; next pathology reports of corresponding biopsies determine whether the body-parts of the detection segments actually represented the target (positive) or not (negative). The verification threshold for the target is calculated so as to optimize an accuracy of its recognition, given by the verification indicators higher than the verification threshold for the positive pathology reports and lower than the verification threshold for the negative pathology reports (for example, so as to minimize the false negatives wherein the verification indicators are lower than the verification threshold for the positive pathology reports). The verifier 455 also exposes a user interface for selecting the type of target for each imaging procedure manually. The verifier 455 accesses (in write mode and possibly in read mode as well) a verification results repository 465. The verification results repository 465 comprises an entry for each fluorescence image in the corresponding repository 410. The entry stores a (verification) result of the verification of the segmentation of the fluorescence image; for example, the verification result is given by the verification indicator and/or by a (verification) flag that is asserted (such as at the logic value 1) when the verification is positive (verification indicator higher than the verification threshold) and it is deasserted (such as at the logic value 0) when the verification is negative (verification indicator lower than the verification threshold), possibly with additional information that has been used to verify the segmentation (as described in the following). A visualizer 470 visualizes the fluorescence images with the (possible) highlighting of their detection segments on the monitor of the imaging system. The visualizer 470 accesses (in read mode) the fluorescence images repository 410, the segmentation masks repository 450 and the verification results repository 465.

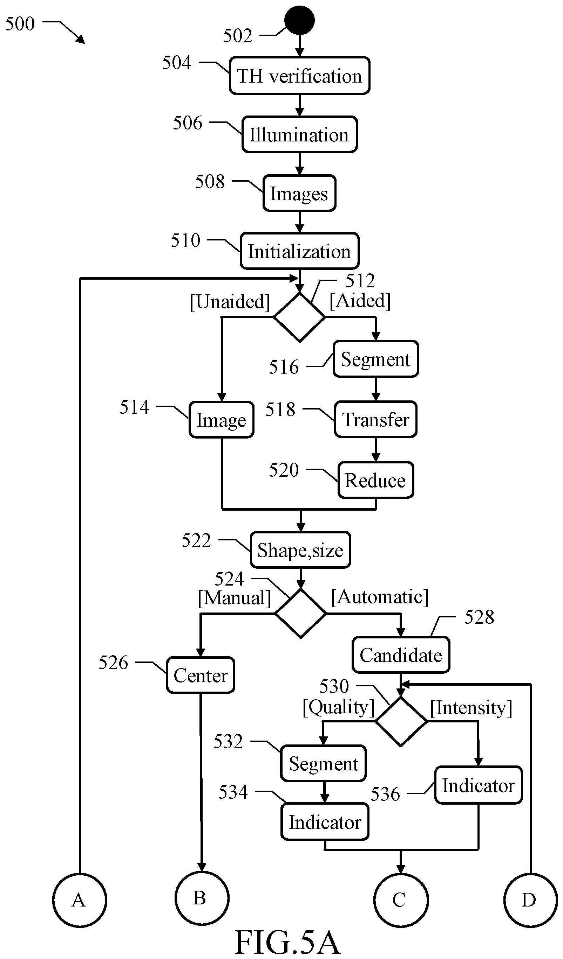

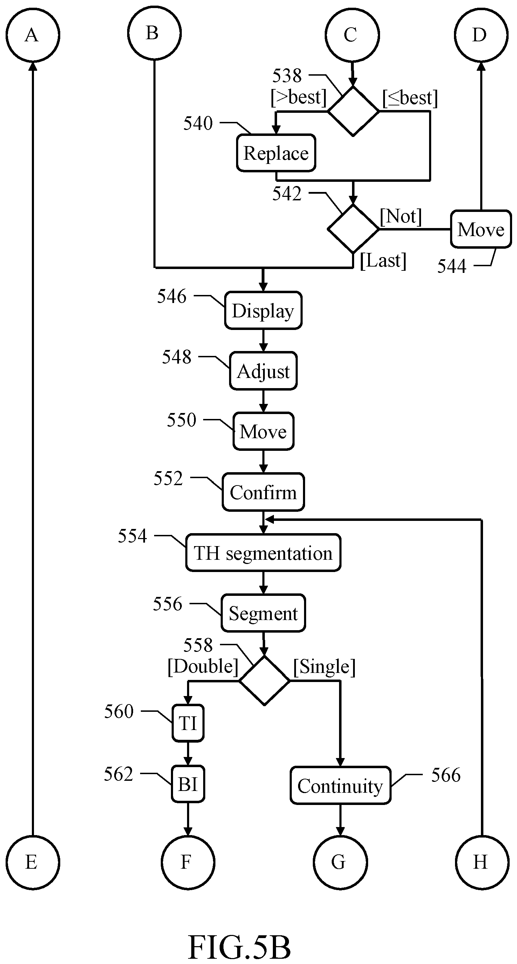

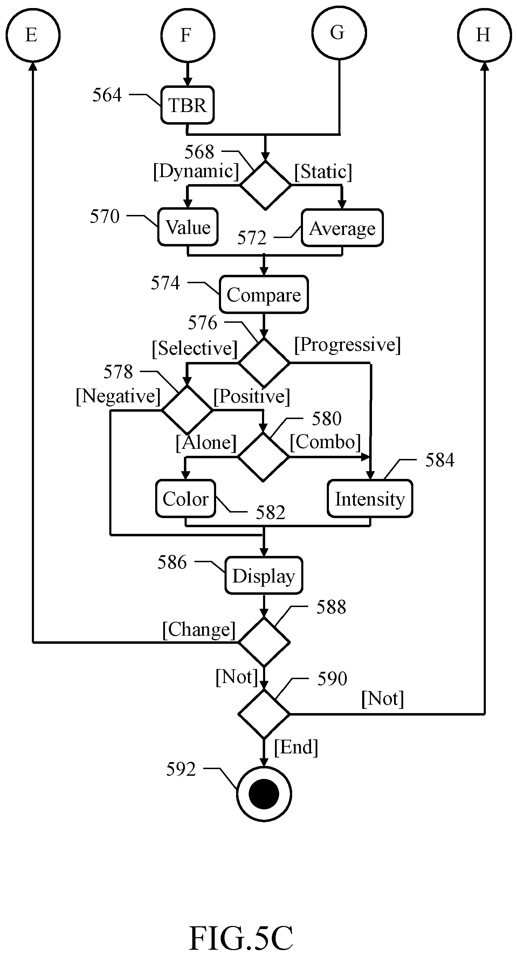

With reference now to FIG.5A-FIG. 5C an activity diagram is shown describing the flow of activities relating to an implementation of the solution according to an embodiment of the present disclosure.

Particularly, the activity diagram represents an exemplary process that may be used for imaging a patient during a surgical procedure with a method 500. In this respect, each block may correspond to one or more executable instructions for implementing the specified logical function on the central unit of the imaging system.

Before the surgical procedure, a healthcare operator (for example, a nurse) administers a fluorescence agent to the patient. The fluorescence agent (for example, Indocyanine Green, Methylene Blue and so on) is adapted to reaching a specific (biological) target, such as a tumor to be resected, and to remain substantially immobilized therein. This result may be achieved by using either a non-targeted fluorescence agent (adapted to accumulating in the target without any specific interaction therewith, such as by passive accumulation) or a targeted fluorescence agent (adapted to attaching to the target by means of a specific interaction therewith, such as achieved by incorporating a target-specific ligand into the formulation of the fluorescence agent, for example, based on chemical binding properties and/or physical structures adapted to interacting with different tissues, vascular properties, metabolic characteristics and so on). The fluorescence agent is administered to the patient intravenously as a bolus (with a syringe); as a consequence, the fluorescence agent circulates within the vascular system of the patient until reaching the tumor and binding thereto; the remaining (unbound) fluorescence agent is instead cleared from the blood pool (according to a corresponding half-life time). After a waiting time allowing the fluorescence agent to accumulate in the tumor and to wash-out from the other body-parts of the patient (for example, from some minutes to 24-72 hours), the surgical procedure may start. Therefore, the operator switches on the imaging system.

In response thereto, the process begins by passing from the black start circle 502 to block 504. At this point, if necessary the operator selects the type of target for the surgical procedure (i.e., organ and tumor) in the user interface of the verifier; accordingly, the verifier retrieves the verification threshold of the (selected) target from the corresponding repository. The operator then places the imaging probe close to a region of the patient wherein a surgical cavity is opened by a surgeon; the operator then enters a start command into the imaging system (for example, with its keyboard). In response thereto, the fluorescence manager and the reflectance manager at block 506 turn on the excitation light source and the white light source, respectively, for illuminating the field of view. Passing to block 508, the fluorescence manager and the reflectance manager concurrently acquire a (new) fluorescence image and a (new) reflectance image, respectively, and add them to the corresponding repositories; in this way, the fluorescence image and the reflectance image are acquired substantially at the same time and they provide different representations (in terms of fluorescence light and visible light, respectively) of the same field of view that are spatially coherent (i.e., a predictable correlation exists among their pixels, down to a perfect identity). The fluorescence/reflectance images are displayed in succession on the monitor in real-time, so as to allow the operator to correct a position of the imaging probe and/or the patient. These operations continue until the surgical cavity is correctly imaged, and the operator at block 510 enters an initialization command into the imaging system (for example, with its keyboard) for setting the analysis region in the (current) fluorescence image, possibly exploiting the corresponding (current) reflectance image. The flow of activity now branches at block 512 according to an operation mode of the imaging system (for example, set manually during a configuration thereof, defined by default or the only one available). Particularly, in the unaided (operation) mode the block 514 is executed, whereas in the aided (operation) mode the blocks 516-520 are executed; in both cases, the flow of activity again merges at block 522.

With reference now to the block 514 (unaided mode), the setter sets a context space (for setting the analysis region) to the whole fluorescence image (extracted from the corresponding repository). The process then descends into the block 522.

With reference instead to the block 516 (aided mode), the reducer segments the fluorescence image according to a semantic segmentation of the reflectance image (extracted from the corresponding repositories), as described in the co-pending international application No. PCT/EP2021/054162 of 19 February 2021. Briefly, the reducer may apply one or more filters to improve the quality of the reflectance image; particularly, a histogram equalization may be applied when the reflectance image is suitable for identifying the informative region but not very bright (*i.e.*, an average of its pixel values is comprised between corresponding thresholds). In addition or in alternative, the reducer may down-scale the reflectance image to reduce computational complexity, may group its pixels into substantially homogenous groups (each represented by a group value based on the corresponding pixel values) to simplify the semantic segmentation, may apply a motion compensation algorithm (to align the reflectance image with the fluorescence image) and/or a warping algorithm (to correct a distortion of the reflectance image with respect to the fluorescence image). The reducer then segments the (possibly pre-processed) reflectance image semantically by applying a classification algorithm or a deep learning technique. In case of the classification algorithm, the reducer extracts one more features from the reflectance image and possibly from the fluorescence image as well, by applying filters generating corresponding feature maps; the reducer then calculates the reflectance reduction mask by applying a specific classification algorithm, such as the Conditional Random Field (CRF) algorithm, to the feature maps. The reducer may optionally refine the reflectance reduction mask so obtained (for example, by assigning any disconnected portions of the non-informative region completely surrounded by the informative region thereto and/or by removing isolated misclassified pixels). In case of the deep learning technique, instead, the reducer applies the reflectance image (and possibly the fluorescence image as well) to a neural network (such as a U-Net), which directly generates the reflectance reduction mask. The reducer at block 518 segments the fluorescence image into its informative region and non-informative region by transferring the corresponding segmentation of the reflectance image thereto. For this purpose, the reducer optionally adapts the reflectance reduction mask to the fluorescence image (by down-scaling/up-scaling it when they have different sizes). The reducer then sets the fluorescence reduction mask equal to the (possibly adapted) reflectance reduction mask and saves it into the corresponding repository. The setter at block 520 sets the context space (for setting the analysis region) to the informative region of the fluorescence image defined by the (fluorescence) reduction mask. The process then descends into the block 522.

With reference now to the block 522, the setter initializes the analysis region to have an initial shape (for example, a square) and an initial size. The initial size is equal to a default fraction (such as 1-10%, preferably 2-8% and still more preferably 3-7%, such as 5%) of a size of the context space; for example, the analysis region is sized to contain a number of pixels equal to the default fraction of the number of pixels of the context space (given by all the cells of the fluorescence image in the unaided mode or by the cells of the reduction mask whose reduction flag is asserted in the aided mode). The flow of activity again branches at block 524 according to a (further) operation mode of the imaging system (for example, set manually during a configuration thereof, defined by default or the only one available). Particularly, in a manual (operation) mode the block 526 is executed, whereas in an automatic (operation) mode the blocks 528-544 are executed; in both cases, the flow of activity again merges at block 546.

With reference now to the block 526 (manual mode), the setter initializes the analysis region to have an initial position, centered in the context space. For example, a working frame is defined as the fluorescence image (in the unaided mode) or as the smallest rectangular area of the fluorescence image enclosing the informative region (in the aided mode); the setter determines the center of the working frame and then aligns the center of the analysis region with it. The process then descends into the block 546.

With reference instead to the block 528 (automatic mode), the analysis region is initialized to an initial position of a best candidate region selected among a plurality of candidate regions (being candidate to initialize the analysis region); the candidate regions are defined by moving a window with the initial shape and the initial size of the analysis region throughout the same working frame as above (*i*.*e*., the fluorescence image in the unaided mode or the smallest rectangular area of the fluorescence image enclosing the informative region in the aided mode). For this purpose, at the beginning a (current) candidate region is taken into account at a starting end of the working frame (for example, at its top-left corner). A loop is then entered at block 530, wherein the flow of activity branches according to a selection criterion of the candidate regions (for example, set manually during a configuration thereof, defined by default or the only one available). Particularly, in case of a selection criterion based on quality indicators the blocks 532-534 are executed, whereas in case of a selection criterion based on intensity indicators the block 536 is executed; in both cases, the flow of activity again merges at block 538. With reference now to the block 532 (quality indicators), the setter commands the segmenter to segment the candidate region into its (candidate) detection segment and (candidate) non-detection segment (as described in the following). The setter at block 534 commands the verifier to calculate the (candidate) quality indicator of the segmentation of the candidate region (as described in the following). With reference instead to the block 536 (intensity indicators), the setter calculates an intensity indicator of the candidate region according to its pixel values within the context space (*i*.*e*., all of them in the unaided mode or only the ones belonging to the informative region in the aided mode), for example, equal to their average. Moving now to the block 538, the setter compares the quality/intensity indicator of the candidate region with a running value consisting of the quality/intensity indicator of the candidate region provisionally selected as the analysis region (initialized to a null value). If the quality/intensity indicator is (possibly strictly) higher than the running value, this means that the candidate region is better than the (provisional) analysis region. Therefore, the setter at block 540 provisionally sets the analysis region to the candidate region and replaces the running value with its quality/intensity indicator. The process then continues to block 542; the same point is also reached directly from the block 538 if the quality/intensity indicator is (possibly strictly) lower than the running value (meaning that the provisional analysis region is still so). At this point, the setter verifies whether a last candidate region has been processed; this happens when the candidate region has reached a final end of the working frame, opposite its starting end (for example, its bottom-right corner in the example at issue). If not, the setter at block 544 passes to a next candidate region by moving along a scanning path of the working frame; for example, the candidate region is moved by one or more pixels horizontally away from the starting end (rightwards) until an opposite border of the working frame is reached, then by one or more pixels vertically within the working frame (downwards), then by one or more pixels horizontally in the opposite direction (leftwards) until an opposite border of the working frame is reached, then by one or more pixels vertically within the working frame (downwards) and so on. The process then returns to the block 530 to repeat the same operation on this next candidate region. The same operations may also be performed concurrently (at least in part) to reduce computing time. Conversely, once all the candidate regions have been processed, the loop is exit by descending into the block 546; in this way, at the exit of the loop the analysis region is set to the best candidate region automatically.

With reference now to the block 546, the setter adds a representation of the analysis region so initialized to the fluorescence images that are displayed in succession on the monitor (for example, with an outline of the analysis region in color, such as red, over the fluorescence images in black and white). The surgeon at block 548 may ask the operator to adjust the analysis region manually via the user interface of the setter; for example, a dial may be provided to change the size of the analysis region and/or four buttons may be provided to move the analysis region along corresponding directions (leftwards, rightwards, upwards and downwards). This allows including the suspected representation of the tumor in the analysis region even in unusual conditions (such as when the tumor is very large and/or close to a border of the surgical cavity). In addition or in alternative, the surgeon at block 550 may ask the operator to move the imaging probe or s/he may move the surgical cavity directly (so as to obtain an opposite movement of the analysis region on the corresponding fluorescence/reflectance images). In most practical situations, this allows including the suspected representation of the tumor in the analysis region without changing its size and position via the user interface of the setter; this is especially advantageous when only the surgical cavity is moved, since it allows the surgeon to adjust the analysis region by himself/herself without any contact with the imaging system (and then without any sterility concerns). Once the surgeon confirms that the analysis region is correctly positioned, the operator at block 552 enters a confirmation command into the imaging system (for example, with its keyboard); in response thereto, the setter saves the analysis mask defining the analysis region so determined into the corresponding repository.

From now on, the analysis region in each (new) fluorescence image being acquired is segmented into its detection segment and non-detection segment. For this purpose, the segmenter at block 554 determines a segmentation threshold of the analysis region according to a statistical distribution of its pixel values possibly within the informative region, for example, by applying the Otsu's algorithm (so as to minimize an intra-class variance of the detection segment and the non-detection segment). For this purpose, the segmenter takes into account the pixel values of the fluorescence image whose analysis flag in the analysis mask is asserted, and further whose reduction flag in the reduction mask is asserted in the aided mode (retrieved from the corresponding repositories); in this way, in the aided mode it is possible to arrange the analysis region across the contour of the informative region (such as when the tumor is close to it) without being adversely affected by the content of the non-informative region of the fluorescence image. The segmenter at block 556 generates the segmentation mask by comparing the pixel values of the analysis region possibly within the informative region with the segmentation threshold; particularly, for each pixel whose analysis flag in the analysis mask is asserted and further whose reduction flag in the reduction mask is asserted for the aided mode, the corresponding segmentation flag is asserted when the corresponding pixel value in the fluorescence image is (possibly strictly) higher than the segmentation threshold and it is deasserted otherwise, whereas for each other pixel the corresponding segmentation flag is always deasserted. The segmenter then saves the segmentation mask so obtained into the corresponding repository.

The flow of activity then branches at block 558 according to an evaluation mode of the verification indicator of the segmentation of the analysis region (for example, selected manually at the beginning of the imaging procedure, defined by default or the only one available). Particularly, in a double (evaluation) mode the blocks 560-564 are executed, whereas in a single (evaluation) mode the block 566 is executed; in both cases, the flow of activity again merges at block 568. With reference now to the block 560 (double mode), the quality indicator is determined according to a comparison between the detection segment and the non-detection segment. Particularly, the segmenter calculates a (detection) statistical parameter for the detection segment, for example, equal to an average of its pixel values (TI); for this purpose, the verifier takes into account the pixels values of the fluorescence image whose detection flag is asserted in the segmentation mask (retrieved from the corresponding repositories). Likewise, the segmenter at block 562 calculates a (non-detection) statistical parameter for the non-detection segment, for example, again equal to an average of its pixel values (BI); for this purpose, the verifier takes into account the pixels values of the fluorescence image whose detection flag is deasserted in the segmentation mask and, at the same time, whose analysis flag in the analysis mask is asserted and further whose reduction flag in the reduction mask is asserted for the aided mode (retrieved from the corresponding repositories). The verifier at block 564 calculates the quality indicator according to a comparison between the detection statistical parameter and non-detection statistical parameter, for example, their ratio (TBR). The process then continues to the block 568. With reference instead to the block 566 (single mode), the quality indicator is determined according to the detection segment alone. Particularly, the segmenter sets the quality indicator to a continuity indicator of the detection segment, for example, equal to a maximum value being decreased by an amount proportional to the number of disconnected portions of the detection segment from a main portion thereof (possibly weighted according to their size). The process then continues to the block 568.

With reference now to the block 568, the flow of activity branches according to a verification mode of the imaging system (for example, selected manually at the beginning of the imaging procedure, defined by default or the only one available). Particularly, in a dynamic (verification) mode every fluorescence image is verified individually; this is well suited for situations wherein the field of view changes continually (such as in surgical applications), even if its application in any other situations is not excluded. In this case, the verifier at block 570 sets the verification indicator of the fluorescence image to its quality indicator. Conversely, in a static (verification) mode multiple fluorescence images are taken into account for the verification; this is well suited for situations wherein the field of view remains substantially the same over time (such as in diagnostic/therapeutic applications), even if its application in any other situations is not excluded (for example, by taking into account few fluorescence images). In this case, the verifier at block 572 sets the verification indicator of the fluorescence image to an average of the quality indicators of a set of fluorescence images comprising the current one and one or more previous ones (retrieved from the corresponding repository), for example, in a pre-defined number such as 5-10. This improves a reliability of the verification, thanks to a corresponding smoothing of transient changes of the field of view. In both cases, the verifier at block 574 may also compare the verification indicator with the verification threshold (retrieved above for the target). The verifier then saves the verification result so obtained into the corresponding repository; particularly, the verification result comprises the verification indicator and/or the verification flag that is asserted when the verification indicator is (possibly strictly) higher than the verification threshold (positive verification) and it is deasserted otherwise (negative verification), possibly with additional information, for example, comprising the statistical detection parameter, the statistical non-detection parameter and the verification threshold.

The flow of activity then branches at block 576 according to a highlighting mode of the detection segment (for example, selected manually at the beginning of the imaging procedure, defined by default or the only one available). Particularly, in a selective (highlighting) mode the flow of activity further branches at block 578 according to the verification result (retrieved from the corresponding repository). If the verification result is positive (verification flag asserted), the visualizer at block 580 verifies whether the selective mode is stand-alone. If so, the visualizer at block 582 updates the fluorescence image by highlighting the pixels of the detection segment as indicated in the segmentation mask (retrieved from the corresponding repositories); for example, the pixels of the detection segment are colored (such as in red) with brightness increasing with the corresponding pixel values throughout a whole display range of the monitor (over the rest of the fluorescence image in black and white). Referring back to the block 576, in a progressive (highlighting) mode the process descends into block 584; the same point is also reached from the block 580 when the selective mode is combined with the progressive mode. In both cases, the visualizer updates the fluorescence image by highlighting the pixels of the detection segment as indicated in the segmentation mask (retrieved from the corresponding repositories) with a highlighting intensity depending on the verification indicator; for example, the pixels of the detection segment are colored with brightness increasing with the corresponding pixel values (throughout a whole display range of the monitor) and with wavelength increasing with the verification indicator (such as from blue to red when the progressive mode is stand-alone or from yellow to red when the progressive mode is combined with the selective mode), over the rest of the fluorescence image in black and white, or *vice-versa* the pixels of the detection segment are colored with wavelength increasing with the corresponding pixel values and with brightness increasing with the verification indicator. The process then continues to block 586 from the block 582 or the block 582. The same point is also reached directly from the block 578 in the selective mode if the verification result is negative (verification flag deasserted); in this case, the fluorescence image remains unchanged, for example, completely in black and white (comprising its detection segment). The visualizer now displays the fluorescence image with the representation of the analysis region and possibly with the highlighted detection segment (and with the possible additional information of the corresponding verification) on the monitor. In this way, the coloring of the detection segment and/or its higher intensity provide an immediate indication to the surgeon of the likelihood that it actually represents the tumor to be resected (also thanks to the exploitation of the whole display range of the monitor).

The setter at block 588 verifies whether the operator has entered a change command into the imaging system (for example, with its keyboard) for changing the analysis region, for example, when the surgeon desires to move to a different portion of the surgical cavity. If so, the process returns to the block 512 to set a (new) analysis region as above. Conversely, the segmenter at block 590 verifies whether the operator has entered an end command into the imaging system (for example, with its keyboard) for ending the imaging procedure. If not, the process returns to the block 554 to repeat the same operations on a next fluorescence image. Conversely, the process ends at the concentric white/black stop circles 592 (after the fluorescence manager and the reflectance manager have turned off the excitation light source and the white light source, respectively).

### Modifications

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (*i*.*e*., not limited to the recited items), the terms based on, dependent on, according to, function of and the like should be intended as a non-exclusive relationship (*i*.*e*., with possible further variables involved), the term a/an should be intended as one or more items (unless expressly indicated otherwise), and the term means for (or any means-plus-function formulation) should be intended as any structure adapted to or configured for carrying out the relevant function.

For example, an embodiment provides a method for imaging a field of view. However, the method may be used to image any field of view for any purpose (for example, in medical applications, forensic analyses, defect/crack inspections, and so on).

In an embodiment, the field of view comprises a target. However, the target may be of any type (for example, body-parts, fingerprints, mechanical parts, and so on).

In an embodiment, the target contains a luminescence substance. However, the luminescence substance may be of any extrinsic/intrinsic or exogenous/endogenous type (for example, any luminescence agent, any natural luminescence component, based on any luminescence phenomenon, such as fluorescence, phosphorescence, chemiluminescence, bio-luminescence, induced Raman-radiation, and so on).

In an embodiment, the method comprises the following steps under the control of a computing device. However, the computing device may be of any type (see below).

In an embodiment, the method comprises providing (to the computing device) a luminescence image of the field of view. However, the luminescence image may be provided in any way (for example, acquired directly, transferred with a removable storage unit, uploaded via a network and so on).

In an embodiment, the luminescence image comprises a plurality of luminescence values representative of a luminescence light being emitted by the luminescence substance from corresponding luminescence locations of the field of view. However, the luminescence image may have any size and shape and it may comprise luminescence values of any type and for any luminescence locations (for example, gray-scale or colors values in RBG, YcBcr, HSL, CIE-L*a*b, Lab color and the like representation, for pixels or voxels, and so on); the luminescence light may be of any type (for example, NIR, Infra-Red (IR), visible and so on) and it may be emitted in any way (for example, in response to a corresponding excitation light or more generally to any other excitation different from heating).

In an embodiment, the method comprises setting (by the computing device), an analysis region to a portion of the luminescence image surrounding a suspected representation of the target. However, the analysis region may be set in any way (for example, within the whole luminescence image or its informative region only, pre-defined or determined at run-time, manually, semi-automatically or completely automatically, and so on).

In an embodiment, the method comprises segmenting (by the computing device) the analysis region into a detection segment and a non-detection segment representative of detection of the luminescence agent and of non-detection of the luminescence agent, respectively, according to the luminescence values only of the analysis region. However, the analysis region may be segmented in any way (for example, with thresholding algorithms, classification algorithms, machine learning techniques, defined by a corresponding mask or directly in the fluorescence image, and so on).

In an embodiment, the method comprises determining (by the computing device) a verification indicator based on a quality indicator of said segmenting the analysis region. However, the verification indicator may be determined in any way (for example, based only on the quality indicator of the luminescence image at issue, further on the quality indicators of one or more other luminescence images, and so on) according to any quality indicator (for example, based on a comparison between the detection segment and of the non-detection segment, only on the detection segment, and so on).

In an embodiment, the method comprises displaying (by the computing device) the fluorescence image with the detection segment being highlighted according to the verification indicator. However, the fluorescence image may be displayed in any way (for example, on any display unit, such as a monitor, virtual reality glasses and the like, printed, locally or remotely, in real-time or off-line, alone, combined/overlaid with a corresponding reflectance image and so on); moreover, the detection segment may be highlighted in any way (for example, in color against the rest in back-and-white, with high brightness against the rest with low brightness and so on) according to the verification indicator (for example, selectively to be highlighted or not highlighted, progressively with a highlighting intensity depending on the verification indicator, their combination, with or without any further information, and so on).

Further embodiments provide additional advantageous features, which may however be omitted at all in a basic implementation.

Particularly, in an embodiment the method comprises displaying (by the computing device) the luminescence image with the detection segment being highlighted selectively according to the verification indicator. However, the detection segment may be highlighted selectively in any way (for example, simply according to a comparison of the verification indicator with a threshold, with hysteresis, and so on).

In an embodiment, the method comprises displaying (by the computing device) the luminescence image with the detection segment being highlighted or not highlighted according to a comparison of the verification indicator with a verification threshold. However, the verification threshold may have any value (for example, varying with the target, fixed and so on).

In an embodiment, the method comprises displaying (by the computing device) the luminescence image in black-and-white with the detection segment being highlighted or not highlighted by displaying in color or in black-and-white, respectively. However, the detection segment may be displayed in color in any way (for example, in a single color with brightness changing with its luminescence values, with different colors depending on its luminescence values, in a single color with fixed brightness and so on).

In an embodiment, the method comprises displaying (by the computing device) the luminescence image with the detection segment being highlighted progressively with a highlighting intensity depending on the verification indicator. However, the highlighting intensity may be of any type (for example, different colors, brightness and so on) and it may depend on the verification indicator in any way (for example, according to any linear or non-linear function, such as proportionally, exponentially, logarithmically, in a continuous or discrete way, always or only when the detection segment has to be highlighted as above, and so on).

In an embodiment, the method comprises displaying (by the computing device) the luminescence image with the detection segment being highlighted with the highlighting intensity proportional to the verification indicator. However, this result may be achieved in any way (for example, with the highlighting intensity proportional to the whole verification indicator or only to its portion exceeding the verification threshold, and so on).

In an embodiment, the method comprises displaying (by the computing device) the luminescence image in black-and-white with the detection segment being highlighted by displaying in color with a visual cue depending on the verification indicator. However, this result may be achieved in any way (for example, alone or combined with another visual cue depending on the luminescence values, such as with a single color or different colors depending on the luminescence values and brightness depending on the verification indicator, with fixed brightness or brightness depending on the luminescence values and different colors depending on the verification indicator, and so on).

In an embodiment, the method comprises determining (by the computing device) the quality indicator according to a comparison between a content of the detection segment and a content of the non-detection segment. However, this result may be achieved in any way (for example, by calculating the quality indicator as a similarity index, an inter-class variance, by aggregating the luminescence values of the two segments before or directly, and so on).

In an embodiment, the method comprises calculating (by the computing device) a detection value according to the luminescence values of the detection segment and a non-detection value according to the luminescence values of the non-detection segment. However, the detection/non-detection values may be of any type (for example, corresponding statistical parameters, such as mean, median, mode, variance and the like, maximum/minimum values and so on).

In an embodiment, the method comprises calculating (by the computing device) the quality indicator according to a comparison between the detection value and the non-detection value. However, the quality indicator may be calculated in any way according to the detection value and the non-detection value (for example, as their ratio, difference and so on).

In an embodiment, the method comprises determining (by the computing device) the quality indicator according to a content only of the detection segment. However, the quality indicator may be determining according to the content of the detection segment in any way (for example, by setting the quality indicator to any statistical parameter of its luminescence values, such as their mean, median, mode, variance, by setting the quality indicator according to one or more qualitative properties of the detection segment, such as its continuity, shape, regular/irregular borders, and so on).

In an embodiment, the method comprises calculating (by the computing device) the quality indicator according to a continuity of the detection segment. However, the continuity may be defined in any way (for example, according to a number of disconnected portions of the detection segment, by weighting the disconnected portions according to their size and/or distance, and so on).

In an embodiment, the method comprises initializing (by the computing device) the analysis region to a portion of a context space equal to the luminescence image. However, the context space may be set exactly to the luminescence image or more generally it may correspond thereto (for example, equal to a pre-defined inner portion thereof) and the analysis region may be initialized according thereto in any way (for example, in a position within it that is pre-defined or determined at run time, with or without the possibility of updating it later on, with or without requiring a manual confirmation, and so on).

In an embodiment, the field of view contains a region of interest for the imaging and one or more foreign objects different from the region of interest. However, the region of interest may be of any type (for example, a surgical cavity, an interior cavity of an endoscopic procedure, either of open type accessed via a hollow or of closed type accessed via an incision, and so on) and the foreign objects may be in any number, of any type (for example, instruments, hands, tools, body-parts, background materials and so on) and arranged at any position (for example, overlapping the region on interest to any extent, surrounding it, spaced apart from it, any combination thereof and so on).

In an embodiment, the method comprises providing (to the computing device) an auxiliary image of the field of view. However, the auxiliary image may be provided in any way (either the same or different with respect to the luminescence image).

In an embodiment, the auxiliary image comprises a plurality of auxiliary values representative of an auxiliary light (different from the luminescence light) being received from corresponding auxiliary locations of the field of view. However, the auxiliary image may have any size and shape and it may comprise auxiliary values of any type and for any auxiliary locations (either the same or different with respect to the luminescence image); the auxiliary light may be of any type different from the luminescence light of the luminescence image (for example, visible light, IR light, Ultra-Violet (UV) light, other luminescence light at different wavelength and so on).

In an embodiment, the method comprises identifying (by the computing device) an auxiliary informative region of the auxiliary image representative of the region of interest without the foreign objects according to a content of the auxiliary image. However, the auxiliary informative region may be of any type (for example, a single area, one or more disjoint areas, defined by a corresponding mask or directly in the auxiliary image, and so on) and it may be identified in any way (for example, by segmenting the auxiliary image semantically/non-semantically into the auxiliary informative region and the auxiliary non-informative region, by searching the auxiliary informative region in the auxiliary image and so on).

In an embodiment, the method comprises identifying (by the computing device) a luminescence informative region of the luminescence image corresponding to the auxiliary informative region. However, the luminescence informative region may be identified in any way (for example, by transferring the identification of the auxiliary informative region directly or with any adaptation, with any post-processing down to none and so on). Moreover, this operation may be performed indiscriminately or it may be conditioned on a quality of the identification of the auxiliary informative region; for example, it is possible to calculate a quality metric (of the whole process or of a step thereof) and to assign all the luminescence locations to the luminescence informative region if the quality metric does not reach a corresponding threshold.

In an embodiment, the method comprises initializing (by the computing device) the analysis region to a portion of a context space being defined according to the luminescence informative region. However, the context space may be defined according to the luminescence informative region in any way (for example, equal to it, to the biggest rectangular area of the fluorescence image enclosed in it, to the smallest rectangular area of the fluorescence image enclosing it and so on) and the analysis region may be initialized according thereto in any way (either the same or different with respect to the context space corresponding to the luminescence image).

In an embodiment, the auxiliary image is a reflectance image, the auxiliary light is a visible light and the auxiliary values are representative of the visible light being reflected by the corresponding auxiliary locations of the field of view illuminated by a white light. However, the white light (and the corresponding visible light) may be of any type (for example, any non-luminescence light that causes no significant luminescence phenomenon to the luminescence substance).

In an embodiment, the step of identifying the auxiliary informative region comprises segmenting (by the computing device) the auxiliary image semantically. However, the auxiliary image may be segmented semantically in any way (for example, with a classification algorithm of any type based on any number and type of features, with a deep learning technique based on any neural network, according to the auxiliary image alone or further according to the fluorescence image as well, and so on).

In an embodiment, the auxiliary image is segmented semantically into the auxiliary informative region corresponding to at least one region of interest class of the region of interest and an auxiliary non-informative region corresponding to one or more foreign objects classes of the foreign objects. However, the region of interest class and the foreign object classes may be in any number and of any type (for example, a single region of interest class for the whole region of interest, a single foreign object class for all the foreign objects, multiple region of interest classes for corresponding parts of the region of interest or groups thereof, multiple foreign object classes for corresponding types of foreign objects or groups thereof, and so on).

In an embodiment, the method comprises initializing (by the computing device) the analysis region to a portion of the context space having a predefined initial shape. However, the initial shape may be of any type (for example, square, circle, rectangle and so on); in any case, the possibility is not excluded of selecting the initial shape manually at run-time.

In an embodiment, the method comprises initializing (by the computing device) the analysis region to a portion of the context space having a predefined initial size. However, the initial size may be of any type (for example, a pre-defined percentage of the context space, a pre-defined value and so on); in any case, the possibility is not excluded of selecting the initial size manually at run-time (either in absolute or relative terms).

In an embodiment, the method comprises initializing (by the computing device) the analysis region to a portion of the context space having a predefined initial position. However, the initial position may be of any type (for example, at the center, at an edge and so on); in any case, the possibility is not excluded of selecting the initial position manually at run-time.

In an embodiment, the method comprises setting (by the computing device) the initial size of the analysis region according to at least one pre-defined fraction of a size of the context space. However, the fraction may be of any type and of any value (for example, a single one for the area, two or more for corresponding dimensions, such as width and height, and so on).

In an embodiment, the method comprises setting (by the computing device) the initial position of the analysis region to a center of the context space. However, the analysis region may be centered in the context space in any way (for example, to its geometrical center, to its barycenter and so on).

In an embodiment, the method comprises initializing (by the computing device) the analysis region to a best candidate region of the context space selected among a plurality of candidate regions being candidate to initialize the analysis region according to corresponding contents thereof. However, the candidate regions may be in any number and of any type (for example, with pre-defined shape/size moving throughout the context space by any pitch, with varying shape and/or size throughout the context space and so on); the best candidate region may be selected in any way (for example, according to corresponding quality indicators, intensity indicators, their combination, and so on).

In an embodiment, the method comprises segmenting (by the computing device) each of the candidate regions into a candidate detection segment and a candidate non-detection segment representative of detection of the luminescence agent and of non-detection of the luminescence agent, respectively, according to the luminescence values only of the candidate region. However, each candidate region may be segmented in any way (either the same or different with respect to the analysis region).

In an embodiment, the method comprises calculating (by the computing device) corresponding candidate quality indicators of said segmenting the candidate regions. However, each candidate quality indicator may be determined in any way (either the same or different with respect to the quality indicator).

In an embodiment, the method comprises selecting (by the computing device) the best candidate region having a best one of the candidate quality indicators. However, the best candidate quality indicator may be determined in any way (for example, the highest one or the lowest one when increasing or decreasing, respectively, with the quality and so on).

In an embodiment, the method comprises calculating (by the computing device) corresponding intensity indicators of the candidate regions, each of the intensity indicators being indicative of an intensity of the luminescence light being emitted from the locations only of the corresponding candidate region. However, each intensity indicator may be calculated in any way (for example, according to any statistical parameter of the corresponding luminescence values, such as their mean, median, mode, variance and so on).

In an embodiment, the method comprises selecting (by the computing device) the best candidate region having a best one of the intensity indicators. However, the best intensity indicator may be determined in any way (for example, the highest one or the lowest one when increasing or decreasing, respectively, with a concentration of the luminescence substance and so on).

In an embodiment, the method comprises displaying (by the computing device) the luminescence image with a representation of the analysis region. However, the luminescence image may be displayed with any representation of the analysis region (for example, by its contour in any color, with any line and so on).

In an embodiment, the method comprises receiving (by the computing device) a manual adjustment of the analysis region. However, the analysis region may be adjusted in any way (for example, by changing its shape, size and/or position with any input unit, such as keyboard, trackball, mouse, keypad and so on).

In an embodiment, the method comprises receiving (by the computing device) a confirmation of the analysis region after a manual movement of a content of the field of view. However, the confirmation may be provided with any input unit (for example, keyboard, trackball, mouse, dedicated button and so on) after any movement of the field of view and/or the imaging probe.

In an embodiment, the method comprises providing (to the computing device) one or more further luminescence images of the field of view, each of the further luminescence images comprising corresponding further luminescence values representative of the luminescence light being emitted by the luminescence substance from the locations of the field of view. However, the further luminescence images may be in any number (for example, fixed or up to all the available ones, preceding and/or following the luminescence image, and so on) and they may be of any type and provided in any way (either the same or different with respect to the luminescence image).

In an embodiment, the method comprises segmenting (by the computing device) corresponding further analysis regions of the further luminescence images corresponding to the analysis region each into a further detection segment and a further non-detection segment representative of detection of the luminescence agent and of non-detection of the luminescence agent, respectively, according to the further luminescence values only of the further analysis region. However, the further analysis regions may be segmented in any way (either the same or different with respect to the analysis region).

In an embodiment, the method comprises determining (by the computing device) corresponding further quality indicators of said segmenting the further analysis regions. However, the further quality indicators may be determined in any way (either the same or different with respect to the quality indicator).

In an embodiment, the method comprises determining (by the computing device) the verification indicator further based on the further quality indicators. However, the further quality indicators may be used in any way to determine the verification indicator (for example, by calculating a global quality indicator, such equal to any statistical parameter of the quality indicator and the further quality indicators, like their mean, median, mode, and then using it to determine the verification indicator as above, by determining corresponding partial verification indicators according to the quality indicator and the further quality indicators as above and then using them to determine the verification indicator, such as considering the verification result positive when it is so for at least one pre-defined percentage of them, up to all, and so on).

In an embodiment, the method comprises determining (by the computing device) a segmentation threshold according to a statistical distribution of the luminescence values in the analysis region. However, the segmentation threshold may be determined in any way (for example, based on statistical distribution, entropy, clustering or object attributes, and so on).

In an embodiment, the method comprises segmenting (by the computing device) the analysis region into the detection segment and the non-detection segment according to a comparison of the luminescence values of the analysis region with the segmentation threshold. However, the locations may be assigned to the detection/non-detection segments according to the segmentation threshold in any way (for example, to the detection segment when they are (possibly strictly) higher or lower than it, and so on).

In an embodiment, the method is for imaging a body-part of a patient in a medical application. However, the medical application may be of any type (for example, surgical, diagnostic, therapeutic and so application). In any case, although the method may facilitate the task of a physician, it only provides intermediate results that may help him/her but with the medical activity *stricto sensu* that is always made by the physician himself/herself; moreover, the body-part may be of any type (for example, organs, such as liver, prostate or heart, regions, tissues and so on), in any condition (for example, within a living being, within a dead body, extracted from a body, such as a sample of a biopsy, and so on) and of any patient (for example, a human being, an animal, and so on).

In an embodiment, the target is defined by a target condition of the body-part. However, the target condition may be of any type (for example, any pathological tissue such as tumor, inflammation and the like, healthy tissue and so on).

In an embodiment, a luminescence agent has been pre-administered to the patient before performing the method. However, the luminescence agent may be of any type (for example, any targeted luminescence agent, such as based on specific or non-specific interactions, any non-targeted luminescence agent, and so on) and it may have been pre-administered in any way (for example, with a syringe, an infusion pump, and so on) and at any time (for example, in advance, immediately before performing the method, continuously during it, and so on). In any case, this is a data-processing method that may be implemented independently of any interaction with the patient; moreover, the luminescence agent may also be administered to the patient in a non-invasive manner (for example, orally for imaging the gastrointestinal tract, via a nebulizer into the airways, via topical spray application or topical introduction during a surgical procedure, and so on), or in any case without any substantial physical intervention on the patient that would require professional medical expertise or entail any health risk for him/her (for example, intramuscularly).

In an embodiment, the field of view comprises a surgical cavity exposing the body-part during a surgical procedure. However, the surgical cavity may be of any type for any surgical procedure (for example, wound in minimally invasive surgery, open-body in standard surgery and so on).

In an embodiment, the luminescence substance is a fluorescence substance (with the luminescence image being a fluorescence image and the luminescence values being representative of a fluorescence light emitted by the fluorescence substance from the corresponding luminescence locations illuminated by an excitation light thereof). However, the fluorescence substance may be of any type (for example, extrinsic or intrinsic, exogenous or endogenous, and so on).

Generally, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

An embodiment provides a computer program, which is configured for causing a computing device to perform the above-mentioned method when the computer program is executed on the computing device. An example not covered by the claims provides a computer program product, which comprises a computer readable storage medium embodying a computer program, the computer program being loadable into a working memory of a computing device thereby configuring the computing device to perform the same method. However, the computer program may be implemented as a stand-alone module, as a plug-in for a pre-existing software program (for example, a manager of the imaging system) or even directly in the latter. In any case, similar considerations apply if the computer program is structured in a different way, or if additional modules or functions are provided; likewise, the memory structures may be of other types, or may be replaced with equivalent entities (not necessarily consisting of physical storage media). The computer program may take any form suitable to be used by any computing device (see below), thereby configuring the computing device to perform the desired operations; particularly, the computer program may be in the form of external or resident software, firmware, or microcode (either in object code or in source code - for example, to be compiled or interpreted). Moreover, it is possible to provide the computer program on any computer readable storage medium. The storage medium is any tangible medium (different from transitory signals per se) that may retain and store instructions for use by the computing device. For example, the storage medium may be of the electronic, magnetic, optical, electromagnetic, infrared, or semiconductor type; examples of such storage medium are fixed disks (where the program may be pre-loaded), removable disks, memory keys (for example, of USB type), and the like. The computer program may be downloaded to the computing device from the storage medium or via a network (for example, the Internet, a wide area network and/or a local area network comprising transmission cables, optical fibers, wireless connections, network devices); one or more network adapters in the computing device receive the computer program from the network and forward it for storage into one or more storage devices of the computing device. In any case, the solution according to an embodiment of the present disclosure lends itself to be implemented even with a hardware structure (for example, by electronic circuits integrated in one or more chips of semiconductor material, such as a Field Programmable Gate Array (FPGA) or application-specific integrated circuits), or with a combination of software and hardware suitably programmed or otherwise configured.

An embodiment provides a system, which comprises means configured for performing the steps of the above-mentioned method. An embodiment provides a system comprising a circuit (i.e., any hardware suitably configured, for example, by software) for performing each step of the same method. However, the system may be of any type (for example, any computing device, such as a central unit of an imaging system, a separate computer and so on).

In an embodiment, the system is an imaging system. However, the imaging system may be of any type (for example, a guided surgery equipment, an endoscope, a laparoscope and so on).

In an embodiment, the imaging system comprises an illumination unit for applying the excitation light and possibly the white light to the field of view. However, the illumination unit may be of any type (for example, based on laser, LEDs, UV/halogen/Xenon lamps, and so on).

In an embodiment, the imaging system comprises an acquisition unit for acquiring the fluorescence image and possibly the auxiliary image. However, the acquisition unit may be of any type (for example, based on any number and type of lenses, wave guides, mirrors, CCD, ICCD, EMCCD, CMOS, InGaAs or PMT sensors, and so on).

Generally, similar considerations apply if the system has a different structure or comprises equivalent components, or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

An example not covered by the claims provides a surgical method comprising the following steps. A body-part of the patient is imaged according to the above-mentioned method thereby displaying the luminescence image with the detection segment being highlighted according to the verification indicator during a surgical procedure of the body-part. The body-part is operated according to said displaying the luminescence image. However, the proposed method may find application in any kind of surgical method in the broadest meaning of the term (for example, for curative purposes, for prevention purposes, for aesthetic purposes, and so on) and for operating any kind of body-part of any patient (see above).

An example not covered by the claims provides a diagnostic method comprising the following steps. A body-part of the patient is imaged according to the above-mentioned method thereby displaying the luminescence image with the detection segment being highlighted according to the verification indicator during a diagnostic procedure of the body-part. The body-part is analyzed according to said displaying the luminescence image. However, the proposed method may find application in any kind of diagnostic applications in the broadest meaning of the term (for example, aimed at evaluating health conditions, discovering new lesions, monitoring known lesions, and so on) and for analyzing any kind of body-part of any patient (see above).

An example not covered by the claims provides a therapeutic method comprising the following steps. A body-part of the patient is imaged according to the above-mentioned method thereby displaying the luminescence image with the detection segment being highlighted according to the verification indicator during a therapeutic procedure of the body-part. The body-part is treated according to said displaying the luminescence image. However, the proposed method may find application in any kind of therapeutic method in the broadest meaning of the term (for example, aimed at curing a pathological condition, at avoiding its progress, at preventing the occurrence of a pathological condition, or simply at ameliorating a comfort of the patient) and for treating any kind of body-part of any patient (see above).

In examples not covered by the claims the surgical method, the diagnostic method and/or the therapeutic method each comprises administering the luminescence agent to the patient. However, the luminescence agent may be administered in any way (see above) or this step may be omitted at all (in case the luminescence agent is endogenous).

## Claims

1. A method (500) for imaging a field of view (103) comprising a target (115) containing a luminescence substance, wherein the method (500) comprises:
providing (508), to a computing device (100), a luminescence image (205;205F) of the field of view (103), the luminescence image (205;205F) comprising a plurality of luminescence values representative of a luminescence light being emitted by the luminescence substance from corresponding locations of the field of view (103),
setting (512-552), by the computing device (100), an analysis region (225;260) to a portion of the luminescence image (205;205F) surrounding a suspected representation of the target (115),
segmenting (554-556), by the computing device (100), the analysis region (225;260) into a detection segment (230d;265d) and a non-detection segment (230n;265n) representative of detection of the luminescence agent and of non-detection of the luminescence agent, respectively, according to the luminescence values only of the analysis region (225;260),
the method being **characterized in that** it further comprises:
determining (558-574), by the computing device (100), a verification indicator based on a quality indicator of said segmenting (554-556) the analysis region (225;260), and
displaying (576-586), by the computing device (100), the luminescence image (205;205F) with the detection segment (230d;265d) being highlighted according to the verification indicator.

2. The method (500) according to claim 1, wherein the method (500) comprises displaying (578-586), by the computing device (100), the luminescence image (205,250F) with the detection segment (230d;265d) being highlighted:
selectively according to the verification indicator, and/or
progressively with a highlighting intensity depending on the verification indicator.

3. The method (500) according to any of claim 1 or 2, wherein the method (500) comprises determining (560-564;566), by the computing device (100), the quality indicator according to:
a comparison between a content of the detection segment (230d;265d) and a content of the non-detection segment (230n;265n), or
a content only of the detection segment (230d;265d).

4. The method (500) according to claim 3, wherein the method (500) comprises:
calculating (566), by the computing device (100), the quality indicator according to a continuity of the detection segment (230d;265d).

5. The method (500) according to any claim from 1 to 4, wherein the method (500) comprises:
initializing (514), by the computing device (100), the analysis region (225;260) to a portion of a context space equal to the luminescence image (205;205F).

6. The method (500) according to any claim from 1 to 4, wherein the field of view (103) contains a region of interest (112) for the imaging and one or more foreign objects (210-220;235-245) different from the region of interest (1123), the method (500) comprising:
providing (508), to the computing device (100), an auxiliary image (205R) of the field of view (103), the auxiliary image (205R) comprising a plurality of auxiliary values representative of an auxiliary light, different from the luminescence light, being received from corresponding auxiliary locations of the field of view,
identifying (516), by the computing device (100), an auxiliary informative region (250Ri) of the auxiliary image (205R) representative of the region of interest (112) without the foreign objects (210-220;235-245) according to a content of the auxiliary image (205R),
identifying (518), by the computing device (100), a luminescence informative region (250Fi) of the luminescence image (205F) corresponding to the auxiliary informative region (250Ri), and
initializing (520), by the computing device (100), the analysis region (225;260) to a portion of a context space being defined according to the luminescence informative region (250Fi).

7. The method (500) according to claim 6, wherein the step of identifying (516) the auxiliary informative region comprises:
segmenting (516), by the computing device (100), the auxiliary image (205R) semantically into the auxiliary informative region (250Ri) corresponding to at least one region of interest class of the region of interest (112) and an auxiliary non-informative region (250Rn) corresponding to one or more foreign objects classes of the foreign objects (210-220;235-245).

8. The method (500) according to any claim from 5 to 7, wherein the method (500) comprises:
initializing (522-526), by the computing device (100), the analysis region (225;260) to a portion of the context space (205;250Fi) having predefined initial shape, initial size and/or initial position.

9. The method (500) according to any claim from 1 to 8, wherein the method (500) comprises:
segmenting (532), by the computing device (100), each of the candidate regions into a candidate detection segment and a candidate non-detection segment representative of detection of the luminescence agent and of non-detection of the luminescence agent, respectively, according to the luminescence values only of the candidate region,
calculating (534), by the computing device (100), corresponding candidate quality indicators of said segmenting (532) the candidate regions,
selecting (538-540), by the computing device (100), a best one of the candidate regions having a best one of the candidate quality indicators, and
initializing (528-544), by the computing device (100), the analysis region (225;260) to the best candidate region.

10. The method (500) according to claim 9, wherein the method (500) comprises:
calculating (536), by the computing device (100), corresponding intensity indicators of the candidate regions, each of the intensity indicators being indicative of an intensity of the luminescence light being emitted from the locations only of the corresponding candidate region, and
selecting (538-540), by the computing device (100), the best candidate region having a best one of the intensity indicators.

11. The method (500) according to any claim from 1 to 10, wherein the method (500) comprises:
displaying (546), by the computing device (100), the luminescence image (205;205f) with a representation of the analysis region (225;260), and
receiving (548), by the computing device (100), a manual adjustment of the analysis region (225;260).

12. The method (500) according to any claim from 1 to 11, wherein the method (500) comprises:
providing (508), to the computing device (100), one or more further luminescence images (205;205F) of the field of view (103), each of the further luminescence images (205;205F) comprising corresponding further luminescence values representative of the luminescence light being emitted by the luminescence substance from the locations of the field of view (103),
segmenting (554-556), by the computing device (100), corresponding further analysis regions (225;260) of the further luminescence images (205,205p) corresponding to the analysis region (225;260) each into a further detection segment (230d;265d) and a further non-detection segment (230n;265n) representative of detection of the luminescence agent and of non-detection of the luminescence agent, respectively, according to the further luminescence values only of the further analysis region (225;260),
determining (558-564), by the computing device (100), corresponding further quality indicators of said segmenting (554-556) the further analysis regions (225;260), and
determining (572), by the computing device (100), the verification indicator further based on the further quality indicators.

13. The method (500) according to any claim from 1 to 12, wherein the method (500) comprises:
determining (554), by the computing device (100), a segmentation threshold according to a statistical distribution of the luminescence values in the analysis region (225;260), and
segmenting (556), by the computing device (100), the analysis region (225;260) into the detection segment (230d;265d) and the non-detection segment (230n;265n) according to a comparison of the luminescence values of the analysis region (225;260) with the segmentation threshold.

14. A computer program (400) configured for causing a computing device (100) to perform the method (500) according to any claim from 1 to 13 when the computer program (400) is executed on the computing device (100).

15. A system (100) comprising means (121) configured for performing the steps of the method (500) according to any claim from 1 to 13.

## Patentansprüche

1. Verfahren (500) zum Abbilden eines Sichtfelds (103), das ein Ziel (115) umfasst, das eine lumineszierende Substanz enthält, wobei das Verfahren (500) umfasst:
Bereitstellen (508) eines Lumineszenzbildes (205; 205F) des Sichtfelds (103) an ein Computergerät (100), wobei das Lumineszenzbild (205; 205F) eine Mehrzahl von Lumineszenzwerten umfasst, die ein Lumineszenzlicht darstellen, das von der lumineszierenden Substanz von entsprechenden Stellen des Sichtfelds (103) emittiert wird,
Festlegen (512-552) eines Analysebereichs (225; 260) durch das Computergerät (100) für einen Teil des Lumineszenzbildes (205; 205F), der eine vermutete Darstellung des Ziels (115) umgibt,
Segmentieren (554-556) des Analysebereichs (225; 260) durch das Computergerät (100) in ein Detektionssegment (230d; 265d) und ein Nicht-Detektionssegment (230n; 265n), die jeweils die Detektion des Lumineszenzmittels und die Nicht-Detektion des Lumineszenzmittels darstellen, entsprechend den Lumineszenzwerten nur des Analysebereichs (225; 260),
wobei das Verfahren **dadurch gekennzeichnet** ist, das es ferner umfasst:
Bestimmen (558-574) eines Verifizierungsindikators durch das Computergerät (100) basierend auf einem Qualitätsindikator der Segmentierung (554-556) des Analysebereichs (225; 260), und
Anzeigen (576-586) des Lumineszenzbildes (205; 205F) durch das Computergerät (100) mit dem gemäß dem Verifizierungsindikator hervorgehobenen Detektionssegment (230d; 265d).

2. Verfahren (500) nach Anspruch 1, wobei das Verfahren (500) ein Anzeigen (578, 586) des Lumineszenzbildes (205, 250F) durch das Computergerät (100) umfasst, wobei das Deteketionssegment (230d; 265d) hervorgehoben ist:
selektiv gemäß dem Verifizierungsindikator, und/oder
schrittweise mit einer Hervorhebungsintensität abhängig vom Verifizierungsindikator.

3. Verfahren (500) nach einem der Ansprüche 1 oder 2, wobei das Verfahren (500) ein Bestimmen (560-564; 566) des Qualitätsindikators durch das Computergerät (100) gemäß Folgendem umfasst:
einem Vergleich zwischen einem Inhalt des Detektionssegments (230d; 265d) und einem Inhalt des Nicht-Detektionssegments (230n; 265n), oder
einem Inhalt nur des Detektionssegments (230d; 265d).

4. Verfahren (500) nach Anspruch 3, wobei das Verfahren (500) umfasst:
Berechnen (566) des Qualitätsindikators durch das Computergerät (100) gemäß einer Kontinuität des Detektionssegments (230d; 265d).

5. Verfahren (500) nach einem der Ansprüche 1 bis 4, wobei das Verfahren (500) umfasst:
Initialisieren (514) des Analysebereichs (225; 260) durch das Computergerät (100) auf einen Teil eines Kontextraums, der dem Lumineszenzbild (205; 205F) entspricht.

6. Verfahren (500) nach einem der Ansprüche 1 bis 4, wobei das Sichtfeld (103) einen Bereich (112) von Interesse für das Abbilden und ein oder mehrere Fremdobjekte (210-220; 235-245) enthält, die sich von dem Bereich (1123) von Interesse unterscheiden, wobei das Verfahren (500) umfasst:
Bereitstellen (508) eines Zusatzbildes (205R) des Sichtfelds (103) für das Computergerät (100), wobei das Zusatzbild (205R) eine Mehrzahl von Zusatzwerten umfasst, die ein Zusatzlicht darstellen, das sich vom Lumineszenzlicht unterscheidet und von entsprechenden Zusatzstellen des Sichtfelds empfangen wird,
Identifizieren (516) eines zusätzlichen informativen Bereichs (250Ri) des Zusatzbildes (205R) durch das Computergerät (100), der den Bereich von Interesse (112) ohne die Fremdobjekte (210-220; 235-245) gemäß einem Inhalt des Zusatzbildes (205R) darstellt,
Identifizieren (518) eines lumineszierenden informativen Bereichs (250Fi) des Lumineszenzbildes (205F) durch das Computergerät (100), der dem zusätzlichen informativen Bereich (250Ri) entspricht, und
Initialisieren (520) des Analysebereichs (225; 260) durch das Computergerät (100) auf einen Teil eines Kontextraums, der gemäß dem lumineszierenden informativen Bereich (250Fi) definiert ist.

7. Verfahren (500) nach Anspruch 6, wobei der Schritt des Identifizierens (516) des zusätzlichen informativen Bereichs umfasst:
semantisches Segmentieren (516) des Zusatzbildes (205R) durch das Computergerät (100) in den zusätzlichen informativen Bereich (250Ri), der mindestens einer Klasse von Bereichen von Interesse des Bereichs (112) von Interesse entspricht, und einen zusätzlichen nicht-informativen Bereich (250Rn), der einer oder mehreren Klassen von Fremdobjekten der Fremdobjekte (210-220; 235-245) entspricht.

8. Verfahren (500) nach einem der Ansprüche 5 bis 7, wobei das Verfahren (500) umfasst:
Initialisieren (522-526) des Analysebereichs (225; 260) durch das Computergerät (100) auf einen Teil des Kontextraums (205; 250Fi) mit vordefinierter Anfangsform, Anfangsgröße und/oder Anfangsposition.

9. Verfahren (500) nach einem der Ansprüche 1 bis 8, wobei das Verfahren (500) umfasst:
Segmentieren (532) jedes der Kandidatenbereiche durch das Computergerät (100) in ein Kandidaten-Detektionssegment und ein Kandidaten-Nicht-Detektionssegment, die jeweils die Detektion des Lumineszenzmittels und die Nicht-Detektion des Lumineszenzmittels darstellen, entsprechend den Lumineszenzwerten nur des Kandidatenbereichs,
Berechnen (534) von entsprechenden Kandidatenqualitätsindikatoren der Segmentierung (532) der Kandidatenregionen durch das Computergerät (100),
Auswählen (538-540) einer besten der Kandidatenregionen mit einem besten der Kandidatenqualitätsindikatoren durch das Computergerät (100), und
Initialisieren (528-544) des Analysebereichs (225; 260) auf den besten Kandidatenbereich durch das Computergerät (100).

10. Verfahren (500) nach Anspruch 9, wobei das Verfahren (500) umfasst:
Berechnen (536) entsprechender Intensitätsindikatoren der Kandidatenbereiche durch das Computergerät (100), wobei jeder der Intensitätsindikatoren eine Intensität des Lumineszenzlichts darstellt, das von den Stellen nur des entsprechenden Kandidatenbereichs emittiert wird, und
Auswählen (538-540) des besten Kandidatenbereichs mit dem besten der Intensitätsindikatoren durch das Computergerät (100).

11. Verfahren (500) nach einem der Ansprüche 1 bis 10, wobei das Verfahren (500) umfasst:
Anzeigen (546) des Lumineszenzbildes (205; 205f) mit einer Darstellung des Analysebereichs (225; 260) durch das Computergerät (100), und
Empfangen (548) einer manuellen Anpassung des Analysebereichs (225; 260) durch das Computergerät (100).

12. Verfahren (500) gemäß einem der Ansprüche 1 bis 11, wobei das Verfahren (500) umfasst:
Bereitstellen (508) von einem oder mehreren weiteren Lumineszenzbildern (205; 205F) des Sichtfelds (103) an das Computergerät (100), wobei jedes der weiteren Lumineszenzbilder (205; 205F) entsprechende weitere Lumineszenzwerte umfasst, die das von der lumineszierenden Substanz von den Stellen des Sichtfelds (103) emittierte Lumineszenzlicht darstellen,
Segmentieren (554-556) entsprechender weiterer Analysebereiche (225; 260) der weiteren Lumineszenzbilder (205, 205p), die dem Analysebereich (225; 260) entsprechen, durch das Computergerät (100) jeweils in ein weiteres Detektionssegment (230d; 265d) und ein weiteres Nicht-Detektionssegment (230n; 265n), die jeweils die Detektion des Lumineszenzmittels und die Nicht-Detektion des Lumineszenzmittels darstellen, entsprechend den weiteren Lumineszenzwerten nur des weiteren Analysebereichs (225; 260),
Bestimmen (558-564) entsprechender weiterer Qualitätsindikatoren der Segmentierung (554-556) der weiteren Analysebereiche (225; 260) durch das Computergerät (100), und
Bestimmen (572) des Verifizierungsindikators durch das Computergerät (100) zusätzlich basierend auf den weiteren Qualitätsindikatoren.

13. Verfahren (500) nach einem der Ansprüche 1 bis 12, wobei das Verfahren (500) umfasst:
Bestimmen (554) eines Segmentierungsschwellenwerts durch das Computergerät (100) gemäß einer statistischen Verteilung der Lumineszenzwerte in der Analyseregion (225; 260), und
Segmentieren (556) des Analysebereichs (225; 260) durch das Computergerät (100) in das Detektionssegment (230d; 265d) und das Nicht-Detektionssegment (230n; 265n) gemäß einem Vergleich der Lumineszenzwerte des Analysebereichs (225; 260) mit dem Segmentierungsschwellenwert.

14. Computerprogramm (400), das dazu eingerichtet ist, ein Computergerät (100) zu veranlassen, das Verfahren (500) nach einem der Ansprüche 1 bis 13 auszuführen, wenn das Computerprogramm (400) auf dem Computergerät (100) ausgeführt wird.

15. System (100), das Mittel (121) umfasst, die zum Ausführen der Schritte des Verfahrens (500) nach einem der Ansprüche 1 bis 13 eingerichtet sind.

## Revendications

1. Procédé (500) d'imagerie d'un champ de vision (103) comprenant une cible (115) contenant une substance luminescente, dans lequel le procédé (500) comprend :
la fourniture (508), à un dispositif informatique (100), d'une image de luminescence (205 ; 205F) du champ de vision (103), l'image de luminescence (205 ; 205F) comprenant une pluralité de valeurs de luminescence représentatives d'une lumière de luminescence qui est émise par la substance luminescente à partir d'emplacements correspondants du champ de vision (103),
la définition (512-552), par le dispositif informatique (100), d'une région d'analyse (225 ; 260) sur une partie de l'image de luminescence (205 ; 205F) entourant une représentation suspectée de la cible (115),
la segmentation (554-556), par le dispositif informatique (100), de la région d'analyse (225 ; 260) en un segment de détection (230d ; 265d) et un segment de non-détection (230n ; 265n) représentatifs de la détection de l'agent de luminescence et de la non-détection de l'agent de luminescence, respectivement, en fonction des seules valeurs de luminescence de la région d'analyse (225 ; 260),
le procédé étant **caractérisé en ce qu'**il comprend en outre :
la détermination (558-574), par le dispositif informatique (100), d'un indicateur de vérification basé sur un indicateur de qualité de ladite segmentation (554-556) de la région d'analyse (225 ; 260), et
l'affichage (576-586), par le dispositif informatique (100), de l'image de luminescence (205 ; 205F) avec le segment de détection (230d ; 265d) qui est mis en évidence en fonction de l'indicateur de vérification.

2. Procédé (500) selon la revendication 1, dans lequel le procédé (500) comprend l'affichage (578-586), par le dispositif informatique (100), de l'image de luminescence (205, 250F) avec le segment de détection (230d ; 265d) qui est mis en évidence :
de façon sélective en fonction de l'indicateur de vérification, et/ou
de façon progressive avec une intensité de mise en évidence en fonction de l'indicateur de vérification.

3. Procédé (500) selon l'une quelconque des revendications 1 ou 2, dans lequel le procédé (500) comprend la détermination (560-564 ; 566), par le dispositif informatique (100), de l'indicateur de qualité en fonction de :
une comparaison entre un contenu du segment de détection (230d ; 265d) et un contenu du segment de non-détection (230n ; 265n), ou
un contenu uniquement du segment de détection (230d ; 265d).

4. Procédé (500) selon la revendication 3, dans lequel le procédé (500) comprend :
le calcul (566), par le dispositif informatique (100), de l'indicateur de qualité en fonction d'une continuité du segment de détection (230d ; 265d).

5. Procédé (500) selon l'une quelconque des revendications 1 à 4, dans lequel le procédé (500) comprend :
l'initialisation (514), par le dispositif informatique (100), de la région d'analyse (225 ; 260) à une partie d'un espace de contexte égal à l'image de luminescence (205 ; 205F).

6. Procédé (500) selon l'une quelconque des revendications 1 à 4, dans lequel le champ de vision (103) contient une région d'intérêt (112) pour l'imagerie et un ou plusieurs objets étrangers (210-220 ; 235-245) différents de la région d'intérêt (1123), le procédé (500) comprenant :
la fourniture (508), au dispositif informatique (100), d'une image auxiliaire (205R) du champ de vision (103), l'image auxiliaire (205R) comprenant une pluralité de valeurs auxiliaires représentatives d'une lumière auxiliaire, différente de la lumière de luminescence qui est reçue à partir d'emplacements auxiliaires correspondants du champ de vision,
l'identification (516), par le dispositif informatique (100), d'une région informative auxiliaire (250Ri) de l'image auxiliaire (205R) représentative de la région d'intérêt (112) sans les objets étrangers (210-220 ; 235-245) en fonction d'un contenu de l'image auxiliaire (205R),
l'identification (518), par le dispositif informatique (100), d'une région informative de luminescence (250Fi) de l'image de luminescence (205F) correspondant à la région informative auxiliaire (250Ri), et
l'initialisation (520), par le dispositif informatique (100), de la région d'analyse (225 ; 260) à une partie d'un espace de contexte défini en fonction de la région informative de luminescence (250Fi).

7. Procédé (500) selon la revendication 6, dans lequel l'étape d'identification (516) de la région informative auxiliaire comprend :
la segmentation (516), par le dispositif informatique (100), de l'image auxiliaire (205R) sémantiquement en la région informative auxiliaire (250Ri) correspondant à au moins une région de classe d'intérêt de la région d'intérêt (112) et une région non informative auxiliaire (250Rn) correspondant à une ou plusieurs classes d'objets étrangers des objets étrangers (210-220 ; 235-245).

8. Procédé (500) selon l'une quelconque des revendications 5 à 7, dans lequel le procédé (500) comprend :
l'initialisation (522-526), par le dispositif informatique (100), de la région d'analyse (225 ; 260) sur une partie de l'espace de contexte (205 ; 250Fi) ayant une forme initiale, une taille initiale et/ou une position initiale prédéfinies.

9. Procédé (500) selon la revendication 1 à 8, dans lequel le procédé (500) comprend :
la segmentation (532), par le dispositif informatique (100), de chacune des régions candidates en un segment de détection candidat et un segment de non-détection candidat représentatif de la détection de l'agent de luminescence et de la non-détection de l'agent de luminescence, respectivement, en fonction des valeurs de luminescence uniquement de la région candidate,
le calcul (534), par le dispositif informatique (100), d'indicateurs de qualité candidats correspondants de ladite segmentation (532) des régions candidates,
la sélection (538-540), par le dispositif informatique (100), d'une meilleure région parmi les régions candidates ayant un meilleur des indicateurs de qualité candidats, et
l'initialisation (528-544), par le dispositif informatique (100), de la région d'analyse (225 ; 260) à la meilleure région candidate.

10. Procédé (500) selon la revendication 9, dans lequel le procédé (500) comprend :
le calcul (536), par le dispositif informatique (100), d'indicateurs d'intensité correspondants des régions candidates, chacun des indicateurs d'intensité étant indicatif d'une intensité de la lumière de luminescence qui est émise à partir des emplacements uniquement de la région candidate correspondante, et
la sélection (538-540), par le dispositif informatique (100), de la meilleure région candidate ayant un meilleur indicateur parmi les indicateurs d'intensité.

11. Procédé (500) selon la revendication 1 à 10, dans lequel le procédé (500) comprend :
l'affichage (546), par le dispositif informatique (100), de l'image de luminescence (205 ; 205f) avec une représentation de la région d'analyse (225 ; 260), et
la réception (548), par le dispositif informatique (100), d'un réglage manuel de la région d'analyse (225 ; 260).

12. Procédé (500) selon la revendication 1 à 11, dans lequel le procédé (500) comprend :
la fourniture (508), au dispositif informatique (100), d'une ou de plusieurs autres images de luminescence (205 ; 205F) du champ de vision (103), chacune des autres images de luminescence (205 ; 205F) comprenant des valeurs de luminescence supplémentaires correspondantes représentatives de la lumière de luminescence qui est émise par la substance de luminescence à partir des emplacements du champ de vision (103),
la segmentation (554-556), par le dispositif informatique (100), des régions d'analyse supplémentaires correspondantes (225 ; 260) des autres images de luminescence (205, 205p) correspondant à la région d'analyse (225 ; 260), chacune en un segment de détection supplémentaire (230d ; 265d) et un segment de non-détection supplémentaire (230n ; 265n) représentatif de la détection de l'agent de luminescence et de non-détection de l'agent de luminescence, respectivement, en fonction des valeurs de luminescence supplémentaires uniquement de la région d'analyse supplémentaire (225 ; 260),
la détermination (558-564), par le dispositif informatique (100), des indicateurs de qualité supplémentaires correspondant à ladite segmentation (554-556) des régions d'analyse supplémentaires (225 ; 260), et
la détermination (572), par le dispositif informatique (100), de l'indicateur de vérification basé en outre sur les indicateurs de qualité supplémentaire.

13. Procédé (500) selon la revendication 1 à 12, dans lequel le procédé (500) comprend :
la détermination (554), par le dispositif informatique (100), d'un seuil de segmentation en fonction d'une distribution statistique des valeurs de luminescence dans la région d'analyse (225 ; 260), et
la segmentation (556), par le dispositif informatique (100), de la région d'analyse (225 ; 260) en le segment de détection (230d ; 265d) et le segment de non-détection (230n ; 265n) en fonction d'une comparaison des valeurs de luminescence de la région d'analyse (225 ; 260) avec le seuil de segmentation.

14. Programme informatique (400) configuré pour amener un dispositif informatique (100) à exécuter le procédé (500) selon l'une quelconque des revendications 1 à 13 lorsque le programme informatique (400) est exécuté sur le dispositif informatique (100) .

15. Système (100) comprenant des moyens (121) configurés pour exécuter les étapes du procédé (500) selon l'une quelconque des revendications 1 à 13.
